# EUROPÄISCHE PATENTSCHRIFT

(11) **EP 1 659 153 B1**
(45) Veröffentlichungstag und Bekanntmachung des Hinweises auf die Patenterteilung: **05.12.2007**
(21) Anmeldenummer: 05023942.5
(22) Anmeldetag: 03.11.2005
(51) Int. Cl.: C08L 51/06, C08L 33/06, C08L 71/02, C08L 35/08, C08L 3/02, C08L 33/00, C09D 17/00, C09D 151/06, C09D 133/06, C09D 171/02, C09D 135/08, C09D 103/02, C09D 133/00

(54) **Verwendung von wässrigen Dispersionen von wasserlöslichen (Co)polymerisaten von mindestens einem ethylenisch ungesättigten Monomer MON zur Herstellung von Textilhilfsmitteln**
Use of aqueous dispersions of water-soluble copolymerisates based on at least one ethylenically unsaturated monomer "MON" for the preparation of textile agents
Utilisation de dispersions aqueuses à base des copolymères hydrosolubles d'au moins un monomère "MON" pour la préparation d'adjuvants textiles

(30) Priorität: 05.11.2004 DE 102004054034; 01.12.2004 DE 102004058271
(43) Veröffentlichungstag der Anmeldung: 24.05.2006
(73) Patentinhaber: Duris, Tibor, 67061 Ludwigshafen (DE)
(72) Erfinder: Mukherjee, Pulakesh, Dr., 68309 Mannheim (DE); Duris, Tibor, 67061 Ludwigshafen (DE); Bölter, Henning, 67319 Wattenheim (DE)
(74) Vertreter: Patentanwälte Möll und Bitterich

(56) Entgegenhaltungen:
- DE-A1- 10 118 236

## Beschreibung

Die vorliegende Erfindung betrifft die Verwendung von wässrigen Dispersionen von (Co)polymerisaten von mindestens einem ethylenisch ungesättigten Monomer MON zur Herstellung von Textilhilfsmitteln, ausgewählt aus
(A) Druckpasten für den Pigmentdruck mit einer dynamischen Viskosität im Bereich von 0,1 bis 59 dPa·s, gemessen bei 20°C,
(B) Druckpasten für den Transferdruck, den Dispersionsdruck, den Druck mit Säure- und Metallkomplexfarbstoffen, den Reaktivdruck oder den Küpendruck,
(C) Färbeflotten für die Textilfärbung,
(D) Beschichtungsmitteln,
(E) Ausrüstungsflotten,
dadurch gekennzeichnet, dass mindestens eine wässrige Dispersion in Gegenwart mindestens eines wasserlöslichen Polymeren hergestellt ist, wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
   (β1) einem oder mehreren nichtionischen monoethylenisch ungesättigten Monomeren,
   (β2) einem oder mehreren kationischen monoethylenisch ungesättigten Monomeren,
   (β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

Weiterhin betrifft die vorliegende Erfindung Verfahren zur Herstellung von Druckpasten für den Pigmentdruck mit einer dynamischen Viskosität im Bereich von 0,1 bis 59 dPa·s, gemessen bei 20°C, Druckpasten für den Transferdruck, den Dispersionsdruck, den Druck mit Säure- und Metallkomplexfarbstoffen, den Reaktivdruck oder den Küpendruck, Färbeflotten für die Textilfärbung, Beschichtungsmitteln und Ausrüstungsflotten unter Verwendung von mindestens einer wässrigen Dispersion von mindestens einem (Co)polymerisat von mindestens einem ethylenisch ungesättigten Monomer MON, dadurch gekennzeichnet, dass die wässrige Dispersion in Gegenwart mindestens eines wasserlöslichen Polymers hergestellt ist, wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
   (β1) einem oder mehreren nichtionischen monoethylenisch ungesättigten Monomeren,
   (β2) einem oder mehreren kationischen monoethylenisch ungesättigten Monomeren,
   (β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

Weiterhin betrifft die vorliegende Erfindung Druckpasten für den Pigmentdruck mit einer dynamischen Viskosität im Bereich von 0,1 bis 59 dPa·s, gemessen bei 20°C, Druckpasten für den Transferdruck, den Dispersionsdruck, den Druck mit Säure- und Metallkomplexfarbstoffen, den Reaktivdruck oder den Küpendruck, Färbeflotten für die Textilfärbung, Beschichtungsmittel, Ausrüstungsflotten sowie Verfahren zum Bedrucken, Färben, Beschichten und Ausrüsten von Textil.

Textilhilfsmittel sind ein Arbeitsgebiet, auf dem immer höhere Anforderung an die Qualität, vorteilhafte Gebrauchseigenschaften und ein niedriger Preis vom Markt gefragt sind. Weiterhin werden an Textilhilfsmittel erhebliche Anforderungen gestellt, was beispielsweise die Lagerstabilität und Elektrolyt-Stabilität insbesondere gegenüber anorganischen Salzen betrifft.

Eine wichtige Gruppe von polymeren Textilhilfsmitteln sind sogenannte Verdicker. Mit Hilfe von Verdickern lässt sich die Viskosität von zahlreichen Textilhilfsmitteln wie beispielsweise Pigmentdruckpasten, Beschichtungsmitteln und wässrigen Flotten einstellen.

Die meisten polymeren Textilhilfsmittel und insbesondere Verdicker werden jedoch in Gegenwart von Elektrolyten wie anorganischen Salzen hergestellt. Die Abtrennung von anorganischen Salzen aus polymeren Textilhilfsmitteln ist jedoch aufwändig. Anderseits beeinflussen anorganische Salze die Viskosität und insbesondere die verdickende Wirkung in vielen Fällen nachteilig.

So ist aus US-A-4 380 600 ein Verfahren zur Herstellung von wässrigen Dispersionen von wasserlöslichen Polymeren bekannt, wobei man wasserlösliche Monomere, die wasserlösliche Polymere bilden, in einer wässrigen Lösung mindestens eines anderen Polymeren wie Polyethylenglykol, Polyvinylpyrrolidon oder Stärke, in Gegenwart von Radikale bildenden Initiatoren polymerisiert. Die wässrige Lösung des anderen Polymeren, die bei der Polymerisation vorgelegt wird, enthält 3 bis 150 Gewichtsteile des wasserlöslichen Polymeren. Die Menge der bei der Polymerisation eingesetzten wasserlöslichen Monomeren wie Acrylsäure, Natriumacrylat oder Acrylamid, beträgt 10 bis 150 Gewichtsteile, bezogen auf 100 Gewichtsteile Wasser. Um die Stabilität der so erhältlichen wässrigen Dispersionen von wasserlöslichen Polymeren zu erhöhen, kann man die Polymerisation zusätzlich in Gegenwart von oberflächenaktiven Mitteln und bei Bedarf auch noch in Gegenwart von wasserlöslichen anorganischen Salzen wie Natriumchlorid oder Kaliumsulfat durchführen.

Aus EP-A 0 183 466 ist ein Verfahren zur Herstellung von wässrigen Dispersionen von wasserlöslichen Polymeren bekannt, wobei man die wasserlöslichen Monomeren in einer wässrigen Lösung polymerisiert, die ein Salz z.B. Ammoniumsulfat, und ein polymeres Dispergiermittel enthält, z.B. Polyole, Polyethylenglykol und/oder Polypropylenglykol mit einem Molekulargewicht bis zu 600, kationische oder anionische Polyelektrolyte. Mit Ausnahme von Homopolymerisaten aus speziellen kationischen Monomeren können nach diesem Verfahren keine Homopolymerisate von ionischen Monomeren hergestellt werden, vgl. EP-A 0 183 466, Seite 5, Zeilen 2 bis 6. Wie die Beispiele zeigen, kann man jedoch Copolymerisate aus Acrylamid und Acrylsäure herstellen.

Aus US 5,605,970 ist ein Verfahren zur Herstellung von wässrigen Dispersionen von hochmolekularen anionischen Polymeren bekannt. Bei diesem Verfahren polymerisiert man eine wässrige Lösung von Acrylsäure unter Zusatz von 2 bis 20 Gew.-% Ammoniumsulfat, Glyzerin, Ethylenglykol und eines niedrigmolekularen Terpolymeren aus 66 mol-% Acrylsäure, 22 mol-% Natriumacrylat und 12 mol-% Ethylhexylacrylat in Gegenwart von 3 bis 14 mol-% Ethylhexylacrylat und einem Polymerisationsinitiator bei einem pH-Wert unterhalb von 4,5 unter Bildung einer wässrigen Dispersion eines hochmolekularen Terpolymerisates aus Acrylsäure, Natriumacrylat und Ethylhexylacrylat. Das Terpolymerisat wird nach dem Abkühlen isoliert. Bei dem bekannten Verfahren ist es unerlässlich, ein anorganisches Salz und ein hydrophobes Monomer wie Ethylhexylacrylat, einzusetzen. Dadurch werden aber die Eigenschaften der anionischen Polymerisate in unerwünschter Weise verändert.

Außerdem sind wässrige Dispersionen von wasserlöslichen Polymerisaten von N-Vinylcarbonsäureamiden bekannt. Sie werden gemäß WO 03/046024 durch Polymerisieren von N-Vinylcarbonsäureamiden in wässrigem Medium in Gegenwart von polymeren Stabilisatoren wie Polyethylenglykol, Polypropylenglykol, Polyvinylacetat, Polyvinylalkohol, Polyvinylimidazol oder Polydiallyldimethylammoniumchlorid, hergestellt oder durch Polymerisieren von N-Vinylcarbonsäureamiden in wässrigen Lösungen erhalten, die hohe Konzentrationen an anorganischen Salzen aufweisen, vgl. die Beispiele in der EP-B 0 984 990.

Aus WO 97/34933 sind wässrige Dispersionen von hochmolekularen nichtionischen oder anionischen Polymeren bekannt, die durch Polymerisation der Monomeren in einer gesättigten wässrigen Salzlösung unter Zusatz eines anionischen, wasserlöslichen Polymerstabilisators hergestellt werden. Bevorzugt eingesetzte Monomere sind Acrylamid und/oder Acrylsäure. Geeignete Polymerstabilisatoren sind beispielsweise anionisch geladene wasserlösliche Polymere mit einem Molekulargewicht von 100.000 bis 5 Millionen. Sie werden in Mengen von beispielsweise 0,1 bis 5 Gewichtsprozent, bezogen auf die gesamte Dispersion, eingesetzt. Während der Polymerisation nach WO 97/34933 muss ein pH-Wert im Bereich von 2 bis 5 eingehalten werden.

In der DE 101 18 236 wird eine Zusammensetzung für die Vorbehandlung von Fasermaterialien beschrieben. Die darin beschriebenen Zusammensetzungen enthalten neben Wasser bestimmte Sulfonatsalze oder mehrwertige Alkohole und daneben ethoxilierte/propoxilierte Alkohole und ethoxilierte Alkohole sowie Poly(meth)acrylsäure, Polymaleinsäure oder teilweise hydrolysiertes Polymaleinsäureanhydrid. Durch weitere Zusätze lässt sich die Zusammensetzung zur Bleichung mittels Wasserstoffperoxid verwenden. Die Zusammensetzung führt zu einer guten Primär- und Wiederbenetzbarkeit von Textilien bei kontrollierter Schaumbildungstendenz.

Wässrige Dispersionen von wasserlöslichen anionischen Polymeren, die große Mengen anorganischer Salze in gelöster Form enthalten, können beispielsweise nicht als Verdickungsmittel für wässrige Systeme verwendet werden, weil die anorganischen Salze die Viskosität des zu verdickenden Systems stark erniedrigen. Diese Eigenschaft ist als "salt poisonig effect" bekannt.

Der Erfindung liegt die Aufgabe zugrunde, Textilhilfsmittel zur Verfügung zu stellen, bei deren Herstellung keine oder nur geringe Mengen an stabilisierend wirkenden anorganischen Salze eingesetzt werden müssen, so dass die entstehenden Textilhilfsmittel praktisch frei von anorganischen Salzen sind.

Demgemäß wurde die eingangs definierte Verwendung und das eingangs definierte erfindungsgemäße Verfahren gefunden.

Als Textilhilfsmittel im Sinne der vorliegenden Erfindung sind solche Stoffe zu verstehen, die in Kombination mit mindestens einem weiteren Stoff bei der Veredlung von textilen Substraten eingesetzt werden. Als Veredlung sind beispielsweise das Ausrüsten, Beschichten, optische Aufhellen und Kolorieren wie beispielsweise Färben oder Bedrucken von textilen Substraten zu nennen.

Unter textilen Substraten bzw. Textil sind im Rahmen der vorliegenden Erfindung Textilfasern, textile Halb- und Fertigfabrikate und daraus hergestellte Fertigwaren zu verstehen, die neben Textilien für die Bekleidungsindustrie beispielsweise auch Teppiche und andere Heimtextilien sowie technischen Zwecken dienende textile Gebilde umfassen. Dazu gehören auch ungeformte Gebilde wie beispielsweise Flocken, linienförmige Gebilde wie Bindfäden, Fäden, Garne, Leinen, Schnüre, Seile, Zwirne sowie Körpergebilde wie beispielsweise Filze, Gewebe, Gewirke, Vliesstoffe und Watten. Die Textilien können natürlichen Ursprungs sein, beispielsweise Baumwolle, Wolle oder Flachs, oder synthetisch, beispielsweise Polyamid, Polyester, modifiziertem Polyester, Polyestermischgewebe, Polyamidmischgewebe, Polyacrylnitril, Triacetat, Acetat, Polycarbonat, Polyolefine wie Polyethylen oder Polypropylen, Polyvinylchlorid, Polyestermikrofasem und Glasfasergewebe.

Erfindungsgemäß verwendet man wässrige Dispersionen von (Co)polymerisaten von mindestens einem ethylenisch ungesättigten Monomer MON zur Herstellung von Textilhilfsmitteln, ausgewählt aus
(A) Druckpasten für den Pigmentdruck mit einer dynamischen Viskosität im Bereich von 0,1 bis 59 dPa·s, gemessen bei 20°C,
(B) Druckpasten für den Transferdruck, den Dispersionsdruck, den Druck mit Säure- und Metallkomplexfarbstoffen, den Reaktivdruck oder den Küpendruck,
(C) Färbeflotten für die Textilfärbung,
(D) Beschichtungsmitteln,
(E) Ausrüstungsflotten,
wobei mindestens eine wässrige Dispersion in Gegenwart von mindestens eines wasserlöslichen Polymeren hergestellt ist und wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, unmodifiziert oder vorzugsweise kationisch oder anionisch modifiziert,
(b3) synthetischen Copolymerisaten, erhältlich durch Copolymerisation von
   (β1) einem oder mehreren nichtionischen monoethylenisch ungesättigten Monomeren,
   (β2) einem oder mehreren kationischen monoethylenisch ungesättigten Monomeren,
   (β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

Die Herstellung von erfindungsgemäß verwendeten wässrigen Dispersionen von (Co)polymerisaten von mindestens einem ethylenisch ungesättigten Monomer MON sei im Folgenden beschrieben.

Unter wässrigen Dispersionen sollen im Rahmen der vorliegenden Erfindung wässrige Lösungen, Suspensionen und vorzugsweise Emulsionen verstanden werden.

Als ethylenisch ungesättigte Monomere MON kommen beispielsweise Stickstoff-haltige wasserlösliche ethylenisch ungesättigte Monomere und anionische ethylenisch ungesättigte Monomere in Frage.

Geeignete Stickstoff-haltige wasserlösliche ethylenisch ungesättigte Monomere sind beispielsweise Homopolymere von N-Vinylformamid, N-Vinylacetamid, N-Vinylimidazol und N-Vinylpyrrolidon oder Copolymere aus mindestens zwei der vorstehend genannten Monomere.

Geeignete anionische ethylenisch ungesättigte Monomere sind beispielsweise:
monoethylenisch ungesättigte C₃- bis C₅-Carbonsäuren, beispielsweise monoethylenisch ungesättigte C₃- bis C₅-Mono- und Dicarbonsäuren wie Acrylsäure, Methacrylsäure, Ethacrylsäure, Crotonsäure, Maleinsäure oder Fumarsäure,
Vinylsulfonsäure, Styrolsulfonsäure, insbesondere *para*-Styrolsulfonsäure, Acrylamidomethylpropansulfonsäure, beispielsweise 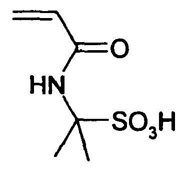
Vinylphosphonsäure

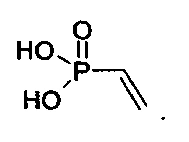

Dabei kann man vorstehend genannte ethylenisch ungesättigte anionischen Monomere jeweils als freie Säure oder in Form ihrer Alkalimetall- oder Ammoniumsalze einsetzen.

Zu bevorzugt eingesetzten ethylenisch ungesättigten anionischen Monomeren gehören (Meth)acrylsäure, Maleinsäure und Acrylamidomethylpropansulfonsäure, besonders bevorzugt ist Acrylsäure.

Ethylenisch ungesättigte anionische Monomere kann man zu Homopolymerisaten oder auch in Mischung untereinander oder mit anderen Comonomeren zu Copolymerisaten polymerisieren. Beispiele sind die Homopolymerisate der Acrylsäure oder Copolymerisate der Acrylsäure mit Methacrylsäure und/oder Maleinsäure.

Die (Co)polymerisation von vorstehend genannten ethylenisch ungesättigten anionischen Monomeren kann man jedoch auch in Gegenwart von mindestens einem ethylenisch ungesättigten Comonomeren durchführen, das nichtionisch sein oder eine positive Ladung tragen kann, also kationisch ist. Beispiele für geeignete nichtionische oder kationische Comonomere sind
(Meth)acrylamid,
Acrylsäureester von C₁-C₄-Alkanolen, beispielsweise Acrylsäuremethylester, Acrylsäureethylester, Acrylsäure-n-propylester, Acrylsäure-iso-propylester, Acrylsäure-n-butylester, Acrylsäure-iso-butylester, Acrylsäure-sec.-butylester, Acrylsäure-sec.-butylester, Acrylsäure-tert.-butylester,
Methacrylsäureester von Methanol oder Ethanol,
Vinylacetat, Vinylpropionat,
Mono- oder Diallyldi-(C₁-C₄-alkyl)ammoniumsalzen, insbesondere Halogeniden der Formel 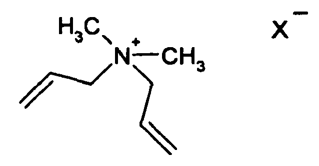 wobei X⁻ gewählt wird aus beispielsweise Fluorid, Bromid, Jodid und insbesondere Chlorid,
2-[N,N-Di-(C₁-C₄-alkyl)amino]ethyl(meth)acrylate, 3-[N,N-Di-(C₁-C₄-alkyl)aminopropyl-(meth)acrylate, wobei C₁-C₄-Alkyl jeweils verschieden oder vorzugsweise gleich sein können und gewählt aus Ethyl, n-Propyl, iso-Propyl, n-Butyl, iso-Butyl und bevorzugt Methyl, ganz besonders bevorzugt sind 2-(N,N-Dimethylamino)ethyl(meth)acrylat und 3-(N,N-Dimethyl)aminopropyl(meth)acrylat,
N-Vinylimidazol und mit C₁-C₄-Alkyl oder Benzyl quatemiertes N-Vinylimidazol, wobei als Gegenionen beispielsweise Halogenid, insbesondere Bromid oder Chlorid, oder Hydrogensulfat geeignet sind.

Basische Comonomere wie 2-[N,N-Di-(C₁-C₄-alkyl)amino]ethyl(meth)acrylate und 3-[N,N-Di-(C₁-C₄-alkyl)aminopropyl(meth)acrylate können sowohl in Form der freien Basen als auch in partiell oder in vollständig gepufferter Form bei der Copolymerisation eingesetzt werden.

Nichtionische und/oder kationische Comonomere kann man bei der Herstellung der erfindungsgemäß verwendeten Copolymerisate vorzugsweise in solchen Mengen zusetzen, dass die entstehenden Copolymeren wasserlöslich sind und insgesamt anionische Ladung aufweisen, die beispielsweise durch Alkalimetallkationen oder Ammoniumkationen, die substituiert sein können, stabilisiert sein können. Bezogen auf die bei der Copolymerisation insgesamt eingesetzten Comonomeren kann die Menge an nichtionischen und/oder kationischen Comonomeren z.B. 0 bis 99, vorzugsweise 5 bis 45 Gew.-% betragen.

Bevorzugte Copolymerisate sind beispielsweise Copolymerisate aus 55 bis 90 Gew.-% Acrylsäure und 45 bis 10 Gew.-% Acrylamid.

In einer speziellen Ausführungsform der vorliegenden Erfindung verwendet man als (Co)polymerisate von mindestens einem ethylenisch ungesättigten anionischen Monomer vernetzte Copolymerisate.

Vernetzte Copolymerisate kann man herstellen, indem man die Copolymerisation zusätzlich in Gegenwart mindestens eines Vernetzers durchführt. Man erhält dann Copolymere mit einem höheren Molekulargewicht als beim (Co)polymerisieren von mindestens einem ethylenisch ungesättigten Monomer MON in Abwesenheit eines Vernetzers. Entsprechend hergestellte vernetzte Copolymere haben ein hohes Wasseraufnahmevermögen. Als Vernetzer können alle Verbindungen verwendet werden, die über mindestens zwei ethylenische Doppelbindungen im Molekül verfügen. Solche Verbindungen werden beispielsweise bei der Herstellung vernetzter Polyacrylsäuren wie superabsorbierenden Polymeren eingesetzt, vgl. EP-A 0 858 478. Beispiele für besonders geeignete Vernetzer sind
Triallylamin,
Pentaerythrittriallether,
Methylenbis(meth)acrylamid,
N,N'-Divinylethylenharnstoff,
vollständig mit Acrylsäure oder Methacrylsäure veresterte zwei- oder mehrwertige Alkohole mit 2 bis 4 C-Atomen wie Ethylenglykoldi(meth)acrylat, 1,4-Butandioldi(meth)-acrylat, Di(meth)acrylate von Polyethylenglykolen mit Molekulargewichten Mₙ von beispielsweise 300 bis 600 g/mol,
Verbindungen der allgemeinen Formel I 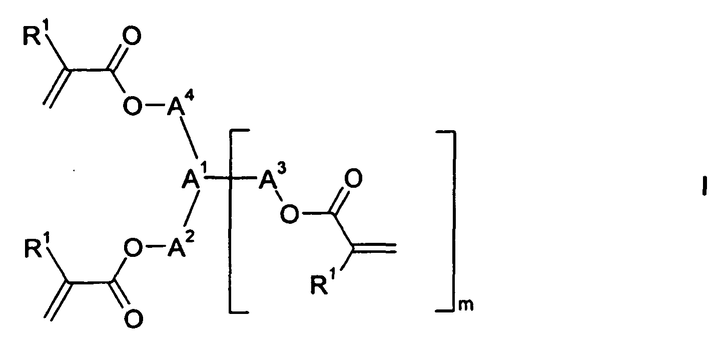 in denen die Variablen wie folgt definiert sind:
- R¹: gleich oder verschieden und gewählt aus Methyl und Wasserstoff;
- m: eine ganze Zahl von 0 bis 2, bevorzugt 1;
- A¹: CH₂ oder -CH₂-CH₂- oder R²-CH oder para-C₆H₄ für den Fall, dass m = 0, CH, R²-C oder 1,3,5-C₈H₃ für den Fall, dass m = 1,
und Kohlenstoff für den Fall, dass m = 2;
- R²: gewählt aus C₁-C₄-Alkyl, wie beispielsweise n-C₄H₉, n-C₃H₇, iso-C₃H₇ und vorzugsweise C₂H₅ und CH₃,
oder Phenyl,
- A², A³, A⁴: gleich oder verschieden und gewählt aus
C₁-C₂₀-Alkylen, wie beispielsweise -CH₂-, -CH(CH₃)-, -CH(C₂H₅)-, -CH(C₆H₅)-, -(CH₂)₂-, -(CH₂)₃-, -(CH₂)₄-, -(CH₂)₅-, -(CH₂)₆-, -(CH₂)₇-, -(CH₂)₈-, -(CH₂)₉-, -(CH₂)₁₀-, -CH(CH₃)-(CH₂)₂-CH(CH₃)-;
*cis-* oder *trans*-C₄-C₁₀-Cycloalkylen, wie beispielsweise *cis*-1,3-Cyclopentyliden, *trans*-1,3-Cyclopentyliden *cis*-1,4-Cyclohexyliden, *trans*-1,4-Cyclohexyliden;
C₁-C₂₀-Alkylen, in denen von einem bis zu sieben jeweils nicht benachbarte C-Atome durch Sauerstoff ersetzt sind, wie beispielsweise -CH₂-O-CH₂-, -CH₂-CH₂-O, -(CH₂)₂-O-CH₂-, -(CH₂)₂-O-(CH₂)₂-, -[(CH₂)₂-O]₂-(CH₂)₂-, -[(CH₂)₂-O]₃-(CH₂)₂-;
C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sind, wie beispielsweise -CH₂-O-CH₂-CH(OH)-CH₂-, -CH₂-O-[CH₂-CH(OH)-CH₂]₂-, -CH₂-O-[CH₂-CH(OH)-CH₂]₃-;
C₆-C₁₄-Arylen, wie beispielsweise para-C₆H₄,
weiterhin 2,2-Bis(hydroxymethyl)butanoltri(meth)acrylat, Pentaerythrittri(meth)acrylat, Pentaerythrittetraacrylat und Triallylmethylammoniumchlorid.

Falls man bei der Herstellung von (Co)polymerisaten von mindestens einem ethylenisch ungesättigten Monomer MON einen oder mehrere Vernetzer einzusetzen wünscht, so beträgt die jeweils verwendete Mengen an Vernetzer beispielsweise 0,0005 bis 5,0, vorzugsweise 0,001 bis 1,0 Gew.-%, bezogen auf die Gesamtmasse der bei der (Co)polymerisation eingesetzten ethylenisch ungesättigten Monomeren MON.

Zum Starten der (Co)polymerisation verwendet man üblicherweise Polymerisationsinitiatoren, die unter den Reaktionsbedingungen Radikale bilden. Geeignete Polymerisationsinitiatoren sind beispielsweise Peroxide, Hydroperoxide, Wasserstoffperoxid, Redoxkatalysatoren und Azoverbindungen wie 2,2-Azobis(N,N- dimethylenisobutyramidine)dihydrochlorid, 2,2-Azobis(4-methoxy-2,4-dimethylvaleronitril), 2,2-Azobis(2,4-dimethylvaleronitril) und 2,2-Azobis(2-amidinopropan)dihydrochlorid). Polymerisationsinitiatoren werden in bei (Co)polymerisationen üblichen Mengen eingesetzt. Bevorzugt werden Azostarter als Polymerisationsinitiatoren verwendet. Man kann die (Co)polymerisation jedoch auch mit Hilfe energiereicher Strahlen wie Elektronenstrahlen oder durch Bestrahlen mit UV-Licht initiieren.

In einer Ausführungsform der vorliegenden Erfindung haben erfindungsgemäß verwendete wässrige Dispersionen von (Co)polymerisaten von mindestens einem ethylenisch ungesättigten Monomer MON eine (Co)polymerisatkonzentration von beispielsweise 1 bis 50, vorzugsweise 10 bis 30 und insbesondere 15 bis 25 Gew.-%. Die (Co)polymerisatkonzentration kann auch als Feststoffgehalt bezeichnet werden.

Erfindungsgemäß verwendete Dispersionen stellt man her in Gegenwart von mindestens einem wasserlöslichen Polymer, wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, unmodifiziert oder vorzugsweise kationisch oder anionisch modifiziert,
(b3) synthetischen Copolymerisaten, erhältlich durch Copolymerisation von
   (β1) einem oder mehreren nichtionischen monoethylenisch ungesättigten Monomeren,
   (β2) einem oder mehreren kationischen monoethylenisch ungesättigten Monomeren,
   (β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

Erfindungsgemäß verwendete Dispersionen werden hergestellt in Gegenwart von mindestens zwei verschiedenen der vorstehend genannten wasserlöslichen Polymeren, wobei mindestens ein wasserlösliches Polymer gewählt wird aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen
(a4) ein- oder beidseitig mit Alkyl-, Carboxyl- oder Aminogruppen substituierten Polyalkylenglykolen,
und mindestens ein wasserlösliches Polymer gewählt wird aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, unmodifiziert oder vorzugsweise kationisch oder anionisch modifiziert,
(b3) synthetischen Copolymerisaten, erhältlich durch Copolymerisation von
   (β1) einem oder mehreren nichtionischen monoethylenisch ungesättigten Monomeren,
   (β2) einem oder mehreren kationischen monoethylenisch ungesättigten Monomeren,
   (β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

Die Menge an wasserlöslichen Polymeren in erfindungsgemäß verwendeten wässrigen Dispersionen beträgt insgesamt beispielsweise 1 bis 70, vorzugsweise 5 bis 50 Gew.-%, besonders bevorzugt 10 bis 25 Gew.-%. Die wässrigen Dispersionen haben beispielsweise bei einem pH-Wert von 4,5 eine dynamische Viskosität im Bereich von 200 bis 12.000 mPa·s, vorzugsweise 200 bis 6000 mPa·s (gemessen in einem Brookfield-Viskosimeter bei 20°C, Spindel 6, 100 U/min).

Als wasserlösliches Polymer der Gruppe (a1) kommen Pfropfpolymerisate von Vinylpropionat oder von Mischungen von Vinylpropionat und Vinylacetat, bevorzugt von Vinylacetat auf Polyalkylenglykol, bevorzugt Polyethylenglykol oder ein- oder beidseitig mit Alkyl-, Carboxyl- oder Aminogruppen substituiertem Polyalkylenglykol, bevorzugt Polyethylenglykol in Betracht.

Als Pfropfgrundlage geeignete Polyalkylenglykole werden beispielsweise in der WO-A-03/046024, Seite 4, Zeile 37 bis Seite 8, Zeile 9, beschrieben. Auf 100 Gewichtsteile der Pfropfgrundlage pfropft man beispielsweise 10 bis 10.000, vorzugsweise 30 bis 300 Gewichtsteile Vinylpropionat, Gemisch von Vinylpropionat und Vinylacetat oder vorzugsweise Vinylacetat. Ganz besonders bevorzugt setzt man als Pfropfgrundlage Polyethylenglykol mit einem Molekulargewicht Mₙ von 1000 bis 100.000 g/mol ein.

Als wasserlösliche Polymere der Gruppe (a2) kommen Copolymere aus Alkylpolyalkylenglykol(meth)acrylaten und (Meth)acrylsäure in Betracht, bevorzugt sind Copolymere aus Alkylpolyalkylenglykolacrylaten und (Meth)acrylsäure. Solche Verbindungen sind beispielsweise als Dispergiermittel für Zement bekannt. Sie werden hergestellt, indem man zunächst Additionsprodukte von Ethylenoxid und/oder Propylenoxid an beispielsweise C₁- bis C₁₈-Alkohole mit Acrylsäure und/oder Methacrylsäure verestert und die so erhaltenen Ester dann mit Acrylsäure und/oder Methacrylsäure copolymerisiert. Üblicherweise eingesetzte wasserlösliche Polymere der Gruppe (a2) enthalten beispielsweise 5 bis 60, vorzugsweise 10 bis 35 Gew.-% einpolymerisierte Einheiten von Alkylpolyalkylenglykol(meth)acrylaten und 95 bis 40, vorzugsweise 90 bis 65 Gew.-% einpolymerisierte Einheiten an (Meth)acrylsäure. Sie haben meistens Molekulargewichten M_{w} von 2.000 bis 50.000, vorzugsweise 5.000 bis 20.000 g/mol. Wasserlösliche Polymere der Gruppe (a2) können in Form der Polysäuren oder auch in vollständig oder partiell neutralisierter Form bei der Herstellung von erfindungsgemäß verwendeten wässrigen Dispersionen eingesetzt werden. Carboxylgruppen der wasserlöslichen Polymere der Gruppe (a2) kann man vorzugsweise mit Natronlauge, Kalilauge oder Ammoniak neutralisieren.

Geeignete wasserlösliche Polymere (a3) sind Polyalkylenglykole, bevorzugt Polyethylenglykole.

In einer Ausführungsform der vorliegenden Erfindung können als wasserlösliche Polymer (a3) eingesetzte Polyalkylenglykole und insbesondere Polyethylenglykole ein Molekulargewicht Mₙ von 100 bis 100.000, bevorzugt von 300 bis 80.000, besonders bevorzugt von 600 bis 50.000 und insbesondere von 1.000 bis 50.000 g/mol aufweisen, wobei der molekulare Aufbau von Polyalkylenglykolen vorstehend definiert ist. Bevorzugte Polyalkylenglykole (a3) sind Polyethylenglykol, Polypropylenglykol sowie Blockcopolymere aus Ethylenoxid und Propylenoxid. Die Blockcopolymeren können Ethylenoxid und Propylenoxid in beliebigen Mengen und in beliebiger Reihenfolge einpolymerisiert enthalten und zwei oder mehr Blöcke aufweisen.

Geeignete wasserlösliche Polymere (a4) sind ein- oder beidseitig mit Alkyl-, Carboxyl- oder Aminogruppen substituierte Polyalkylenglykole und insbesondere Polyethylenglykole, beispielsweise mit Molekulargewichten Mₙ im Bereich von 100 bis 100.000, bevorzugt von 300 bis 80.000, besonders bevorzugt von 600 bis 50.000 und insbesondere von 1.000 bis 50.000 g/mol. Bevorzugte wasserlösliche Polymere (a4) sind ein- oder beidseitig mit Alkyl-, Carboxyl- oder Aminogruppen substituierte Polyethylenglykole, Polypropylenglykole sowie Blockcopolymere aus Ethylenoxid und Propylenoxid, wobei Blockcopolymere Ethylenoxid und Propylenoxid in beliebigen Mengen und in beliebiger Reihenfolge einpolymerisiert enthalten und zwei oder mehr Blöcke aufweisen können. Geeignete Alkylgruppen sind C₁-C₂₀-Alkyl, insbesondere unverzweigtes C₁-C₂₀-Alkyl. Geeignete Carboxylgruppen sind beispielsweise Pivalat und Propionat und insbesondere Acetat, weiterhin Benzoat. Aminogruppen können gewählt sein aus NH₂, und Mono- und Di-C₁-C₄-Alkylamingruppen und cyclischen Aminogruppen wie beispielsweise

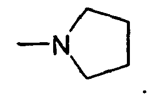

Erfindungsgemäß verwendete wässrige Dispersionen enthalten mindestens ein wasserlösliches Polymer der Gruppen (a1), (a2), (a3) oder (a4) beispielsweise in Mengen von 2 bis 15, vorzugsweise 5 bis 12 Gew.-%, bezogen auf gesamte erfindungsgemäß verwendete Dispersion. Wasserlösliches Polymer der Gruppen (a1), (a2), (a3) oder (a4) wird bei der Herstellung von erfindungsgemäß verwendeter Dispersion eingesetzt, bevorzugt bei der (Co)polymerisation.

Als wasserlösliche Polymere der Gruppe (b1) verwendet man vorzugsweise partiell oder quantitativ hydrolysierte Copolymerisate aus Vinylalkylethern, beispielsweise Vinyl-C₁-C₄-alkylethem, und Maleinsäureanhydrid. C₁-C₄-Alkyl wird gewählt aus Methyl, Ethyl, n-Propyl, iso-Propyl, n-Butyl, iso-Butyl, tert.-Butyl und bevorzugt Methyl oder Ethyl. Wasserlösliche Polymere der Gruppe (b1) sind erhältlich durch Copolymerisieren von Vinylalkylethern mit Maleinsäureanhydrid und anschließende partielle oder quantitative Hydrolyse der Anhydridgruppen zu Carboxylgruppen und gegebenenfalls partielle oder vollständige Neutralisation der Carboxylgruppen. Besonders bevorzugte wasserlösliche Polymere der Gruppe (b1) sind hydrolysierte Copolymerisate aus Vinylmethylether und Maleinsäureanhydrid als freien Polysäure und in Form der zumindest partiell mit Natronlauge, Kalilauge oder Ammoniak neutralisierten Salze.

Geeignete wasserlösliche Polymere (b2) sind Stärke, unmodifiziert oder vorzugsweise kationisch oder anionisch modifiziert. Beispiele für modifizierte Stärken sind kationisch modifizierte Kartoffelstärke, anionisch modifizierte Kartoffelstärke, abgebaute Kartoffelstärke und Maltodextrin. Beispiele für kationisch modifizierte Kartoffelstärken sind die Handelsprodukte Amylofax 15 und Perlbond 970. Eine geeignete anionisch modifizierte Kartoffelstärke ist Perfectamyl A 4692. Hier besteht die Modifizierung im Wesentlichen in einer Carboxylierung von Kartoffelstärke beispielsweise Benzoat, Pivalat und insbesondere Acetat. C*Pur 1906 ist ein Beispiel für eine enzymatisch abgebaute Kartoffelstärke und Maltodextrin C 01915 für eine hydrolytisch abgebaute Kartoffelstärke.

Weitere geeignet wasserlösliche Polymere sind synthetische vorzugsweise statistische Copolymerisate (b3), erhältlich durch Copolymerisation von
(β1) mindestens einem Monomer, gewählt aus (Meth)acrylamid, N-Vinylformamid, N-Vinylpyrrolidon und N-Vinylcaprolactam, ganz besonders bevorzugt sind Acrylamid und N-Vinylpyrrolidon, und
(β2) einem oder mehreren kationischen monoethylenisch ungesättigten Monomeren, gewählt aus Di-C₁-C₄-Alkylamino-C₂-C₄-alkyl(meth)acrylat, beispielsweise 2-(N,N-Dimethylamino)ethyl(meth)acrylat, 3-(Dimethylamino)propyl(meth)acrylat, 2-(N,N-Diethylamino)ethyl(meth)acrylat, 3-(Diethylamino)propyl(meth)acrylat, jeweils partiell oder quantitativ neutralisiert mit beispielsweise mit Halogenwasserstoffsäuren wie beispielsweise Salzsäure, mit Schwefelsäure, para-Toluolsulfonsäure, Ameisensäure oder Essigsäure,
oder partiell oder quantitativ mit C₁-C₄-Alkyl oder Benzyl quaternisiert, beispielsweise durch Umsetzung mit C₁-C₄-Alkylhalogenid wie beispielsweise C₁-C₄-Alkylbromid oder Iodid, durch Umsetzung mit Di- C₁-C₄-alkylsulfat oder mit Benzylhalogenid wie beispielsweise Benzylbromid oder Benzylchlorid. Weitere geeignete Monomere (β2) sind Dimethyldiallylammoniumchlorid, Diethyldiallylammoniumchlorid, Dimethyldiallylammoniumbromid, Diethyldiallylammoniumbromid.

Man kann ein oder mehrere anionische monoethylenisch ungesättigten Monomere (β3) mit einpolymerisieren, gewählt aus (Meth)acrylsäure, Vinylsulfonsäure, Vinylphosphonsäure, Maleinsäure, Fumarsäure, Itakonsäure, Crotonsäure, jeweils als freie Säure oder als Alkalimetal- oder Ammoniumsalz,
wobei der molare Anteil an in (b3) einpolymerisierten kationischen monoethylenisch ungesättigten Monomeren (β2) höher als der Anteil an einpolymerisierten anionischen monoethylenisch ungesättigten Monomeren (β3) ist.

Copolymerisate (b3) können einen K-Wert im Bereich von 15 bis 200, bevorzugt 30 bis 150 und besonders bevorzugt im Bereich von 45 bis 110 aufweisen, bestimmt nach H. Fikentscher (Cellulose-Chemie, Band 13, 58 - 64 und 71 - 74, 1932) in 3 Gew.-% wässriger NaCl-Lösung bei 25°C, einem pH-Wert von 7 und einer Copolymerisat-Konzentration von 0,1 Gew.-%.

In einer Ausführungsform der vorliegenden Erfindung sind synthetische vorzugsweise statistische Copolymerisate (b3) aufgebaut aus
2 bis 90, bevorzugt 20 bis 80 und besonders bevorzugt 30 bis 70 mol-% mindestens eines Monomers (β1),
2 bis 90, bevorzugt 20 bis 80 und besonders bevorzugt 30 bis 70 mol-% mindestens eines kationischen monoethylenisch ungesättigten Monomeren (β2).

In einer anderen Ausführungsform der vorliegenden Erfindung sind synthetische vorzugsweise statistische Copolymerisate (b3) aufgebaut aus
2 bis 90, bevorzugt 10 bis 80 und besonders bevorzugt 20 bis 70 mol-% mindestens eines Monomers (β1),
2 bis 90, bevorzugt 10 bis 80 und besonders bevorzugt 20 bis 70 mol-% mindestens eines kationischen monoethylenisch ungesättigten Monomeren (β2),
0,1 bis 8, bevorzugt bis 10 und besonders bevorzugt 20 mol-% mindestens eines anionischen monoethylenisch ungesättigten Monomeren (β3).

Vorzugsweise beträgt die Löslichkeit von Comonomeren (β1) in Wasser bei 25°C mindestens 100 g/l, ganz besonders bevorzugt sind sie in jedem Verhältnis mit Wasser mischbar.

Geeignete Beispiele für Copolymerisate (b3) sind solche, die hergestellt sind durch Copolymerisation von
Acrylamid und 2-(N,N-Dimethylamino)ethylacrylat-methochlorid,
Acrylamid und 2-(N,N-Dimethylamino)ethylmethacrylat-methochlorid,
Methacrylamid und 2-(N,N-Dimethylamino)ethylacrylat-methochlorid,
Methacrylamid und 2-(N,N-Dimethylamino)ethylmethacrylat-methochlorid,
Acrylamid, 2-(N,N-Dimethylamino)ethylacrylat-methochlorid und Acrylsäure,
Acrylamid, 2-(N,N-Dimethylamino)ethylmethacrylat-methochlorid und Acrylsäure.

Ein besonders geeignetes wasserlösliches Polymer ist enzymatisch abgebaute Särke, insbesondere Maltodextrin.

Erfindungsgemäß verwendete wässrige Dispersionen enthalten mindestens ein wasserlösliches Polymer der Gruppen (b1), (b2) oder (b3) beispielsweise in Mengen von 2 bis 15, vorzugsweise 5 bis 12 Gew.-%. Wasserlösliches Polymer der Gruppen (b1), (b2) oder (b3) wird bei der Herstellung von erfindungsgemäß verwendeter Dispersion eingesetzt. Das Verhältnis der wasserlöslichen Polymeren der Gruppen (a1), (a2), (a3) bzw. (a4) zu wasserlöslichen Polymeren der Gruppen (b1), (b2) bzw. (b3) beträgt in den erfindungsgemäßen Dispersionen beispielsweise 1 : 5 bis 5 : 1 und liegt vorzugsweise in dem Bereich von 1 : 2 bis 2 : 1.

Ohne dass eine Festlegung auf eine bestimmte Theorie gemacht werden soll, so deuten erste Ergebnisse darauf hin, dass wasserlösliche Polymere der Gruppen (a1) bis (a4) und (b1) bis (b3) als Stabilisator für erfindungsgemäß verwendete wässrige Dispersionen wirken.

Erfindungsgemäß verwendete wässrige Dispersionen von (Co)polymerisaten von mindestens einem ethylenisch ungesättigten Monomer MON, beispielsweise von mindestens einem ethylenisch ungesättigten anionischen Monomer oder von mindestens einem Stickstoff-haltigen wasserlöslichen ethylenisch ungesättigten Monomer enthalten vorzugsweise eine Kombination aus
(a1) mindestens einem Pfropfpolymerisat von Vinylacetat auf Polyethylenglykol eines Molekulargewichts Mₙ von 1.000 bis 100.000 g/mol
und
(b1) mindestens ein hydrolysiertes Copolymerisat aus Vinylmethylether und Maleinsäureanhydrid als Polysäure oder in zumindest partiell mit Natronlauge, Kalilauge oder Ammoniak neutralisierter Form.

Bei einer weiteren bevorzugten Ausführungsform der Erfindung verwendet man folgende Kombination aus wasserlöslichen Polymeren:
(a2) mindestens ein Copolymerisat aus Alkylpolyalkylenglykol(meth)acrylat und (Meth)acrylsäure
und
(b1) mindestens ein hydrolysiertes Copolymerisat aus Vinylmethylether und Maleinsäureanhydrid als Polysäure oder in zumindest partiell mit Natronlauge, Kalilauge oder Ammoniak neutralisierter Form.

Weitere Kombinationen von Stabilisatoren zur Herstellung der wässrigen Dispersionen von anionischen Polymerisaten sind beispielsweise Mischungen aus
(a3) Polypropylenglykolen, Polyethylenglykolen und/oder Blockcopolymeren aus Ethylenoxid und Propylenoxid mit Molekulargewichten Mₙ im Bereich von 300 bis 50.000 g/mol und/oder
(a4) mit C₁- bis C₄-Alkylgruppen ein- oder beidseitig substituierten Polypropylenglykolen, Polyethylenglykolen und/oder Blockcopolymeren aus Ethylenoxid und Propylenoxid eines Molekulargewichts Mₙ von 300 bis 50.000 g/mol
und
(b3) synthetischen Copolymerisaten, erhältlich durch Copolymerisation von
   (β1) einem oder mehreren nichtionischen monoethylenisch ungesättigten Monomeren,
   (β2) einem oder mehreren kationischen monoethylenisch ungesättigten Monomeren,
   (β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

In einer Ausführungsform der vorliegenden Erfindung haben erfindungsgemäß verwendete wässrige Dispersionen von (Co)polymerisaten von mindestens einem ethylenisch ungesättigten Monomer MON, beispielsweise von mindestens einem ethylenisch ungesättigten anionischen Monomer oder von mindestens einem Stickstoff-haltigen wasserlöslichen ethylenisch ungesättigten Monomer einen mittleren Teilchendurchmesser im Bereich von 0,1 bis 200 µm, vorzugsweise 0,5 bis 70 µm.

In einer Ausführungsform der vorliegenden Erfindung haben erfindungsgemäß verwendete wässrige Dispersionen von (Co)polymerisaten von mindestens einem ethylenisch ungesättigten Monomer MON, beispielsweise von mindestens einem ethylenisch ungesättigten anionischen Monomer oder von mindestens einem Stickstoff-haltigen wasserlöslichen ethylenisch ungesättigten Monomer bei pH-Werten unterhalb von 6 mit einem Feststoffgehalt von 5 bis 35 Gew.-% eine relativ niedrige Viskosität. Stellt man jedoch einen Feststoffgehalt von 2 Gew.-% ein, so steigt die Viskosität der betreffenden erfindungsgemäßen wässrigen Dispersion stark an.

In einer Ausführungsform der vorliegenden Erfindung weisen wässrige Dispersionen von mindestens einem (Co)polymerisat von mindestens einem ethylenisch ungesättigten Monomer MON, beispielsweise von mindestens einem ethylenisch ungesättigten anionischen Monomer einen Gehalt an anorganischen Salzen im Bereich von 0,001 bis 15 Gew.% auf, bevorzugt 0,1 bis 5 Gew.-%, bezogen auf den Feststoffgehalt der jeweiligen wässrigen Dispersion. In einer anderen Ausführungsform der vorliegenden Erfindung weisen wässrige Dispersionen von mindestens einem (Co)polymerisat von mindestens einem ethylenisch ungesättigten Monomer MON, beispielsweise von mindestens einem ethylenisch ungesättigten anionischen Monomer keinen messbaren Gehalt an anorganischen Salzen auf.

Gegenstand der vorliegenden Erfindung sind weiterhin Verfahren zur Herstellung von Druckpasten für den Pigmentdruck mit einer dynamischen Viskosität im Bereich von 0,1 bis 59 dPa·s, gemessen bei 20°C, Druckpasten für den Transferdruck, den Dispersionsdruck, den Druck mit Säure- und Metallkomplexfarbstoffen, den Reaktivdruck oder den Küpendruck, Färbeflotten für die Textilfärbung, Beschichtungsmitteln, Ausrüstungsflotten, unter Verwendung mindestens einer vorstehend beschriebenen wässrigen Dispersion von mindestens einem (Co)polymerisat von mindestens einem ethylenisch ungesättigten Monomer MON, beispielsweise mindestens einem ethylenisch ungesättigten anionischen Monomer oder von mindestens einem Stickstoff-haltigen wasserlöslichen ethylenisch ungesättigten Monomer.

Gegenstand der vorliegenden Erfindung sind weiterhin Druckpasten für den Pigmentdruck mit einer dynamischen Viskosität im Bereich von 0,1 bis 59 dPa·s, gemessen bei 20°C, Druckpasten für den Transferdruck, den Dispersionsdruck, den Druck mit Säure- und Metallkomplexfarbstoffen, den Reaktivdruck oder den Küpendruck, Färbeflotten für die Textilfärbung, Beschichtungsmittel und Ausrüstungsflotten, hergestellt unter Verwendung mindestens einer vorstehend beschriebenen wässrigen Dispersion von mindestens einem (Co)polymerisat von mindestens einem ethylenisch ungesättigten Monomer MON, beispielsweise mindestens einem ethylenisch ungesättigten anionischen Monomer oder von mindestens einem Stickstoff-haltigen wasserlöslichen ethylenisch ungesättigten Monomer.

Ein weiterer Gegenstand der vorliegenden Erfindung ist ein Verfahren zum Bedrucken von Textil unter Verwendung von mindestens einer erfindungsgemäßen Druckpaste für den Pigmentdruck mit einer dynamischen Viskosität im Bereich von 0,1 bis 59 dPa·s, gemessen bei 20°C, oder mindestens einer Druckpaste für den Transferdruck, den Dispersionsdruck, den Druck mit Säure- und Metallkomplexfarbstoffen, den Reaktivdruck oder den Küpendruck, im Folgenden auch erfindungsgemäßes Textildruckverfahren genannt.

Ein weiterer Gegenstand der vorliegenden Erfindung ist ein Verfahren zum Färben von Textil unter Verwendung von mindestens einer erfindungsgemäßen Färbeflotte, im Folgenden auch erfindungsgemäßes Textilfärbeverfahren genannt. Ein weiterer Gegenstand der vorliegenden Erfindung ist ein Verfahren zum Beschichten von Textil unter Verwendung von mindestens einem erfindungsgemäßen Beschichtungsmittel, im Folgenden auch erfindungsgemäßes Beschichtungsverfahren genannt. Ein weiterer Gegenstand der vorliegenden Erfindung ist ein Verfahren zum Ausrüsten von Textil unter Verwendung von mindestens einer erfindungsgemäßen Ausrüstungsflotte, im Folgenden auch erfindungsgemäßes Ausrüstungsverfahren genannt.

Zur Durchführung des erfindungsgemäßen Textildruckverfahrens kann man beispielsweise so vorgehen, dass man mindestens eine erfindungsgemäß verwendete wässrige Dispersion von (Co)polymerisat von mindestens einem ethylenisch ungesättigten Monomer MON, beispielsweise von mindestens einem ethylenisch ungesättigten anionischen Monomer oder von mindestens einem Stickstoff-haltigen wasserlöslichen ethylenisch ungesättigten Monomer zu einer Druckpaste verarbeitet, im Folgenden auch erfindungsgemäße Druckpaste genannt, und danach nach an sich bekannten Methoden textile Substrate bedruckt.

Dabei werden im folgenden erfindungsgemäße Druckpasten für den Pigmentdruck mit einer dynamischen Viskosität im Bereich von 0,1 bis 59 dPa·s, gemessen bei 20°C, Druckpasten für den Transferdruck, den Dispersionsdruck, den Druck mit Säure- und Metallkomplexfarbstoffen, den Reaktivdruck oder den Küpendruck auch allgemein als erfindungemäße Druckpasten bezeichnet. Erfindungsgemäße Druckpasten für den Pigmentdruck mit einer dynamischen Viskosität im Bereich von 0,1 bis 59 dPa·s, gemessen bei 20°C, werden auch als erfindungsgemäße Pigmentdruckpasten bezeichnet.

In einer Ausführungsform der vorliegenden Erfindung haben solche erfindungsgemäße Druckpasten, die gewählt sind aus Druckpasten für den Transferdruck, den Dispersionsdruck, den Druck mit Säure- und Metallkomplexfarbstoffen, den Reaktivdruck oder den Küpendruck, bei 20°C eine Viskosität im Bereich von 0,3 bis 4000 dPa·s, bevorzugt 20 bis 200 dPa·s und besonders bevorzugt 35 bis 100 dPa·s. Viskositäten lassen sich nach gängigen Methoden bestimmen, insbesondere beispielsweise mit einem Rotationsviskosimeter, zum Beispiel dem Viscotester VT02 oder VT24 der Fa. Haake Mess-Technik GmbH u. Co., Karlsruhe.

Erfindungemäße Pigmentdruckpasten weisen eine dynamische Viskosität im Bereich von 0,1 bis 59 dPa·s, bevorzugt 15 bis 50 dPa·s, besonders bevorzugt 20,5 bis 45 dPa·s auf, gemessen bei 20°C, beispielsweise mit einem Viscotester VT02 oder VT24 der Fa. Haake Mess-Technik GmbH u. Co., Karlsruhe.

Vorteilhaft stellt man erfindungsgemäße Druckpasten durch Mischen von mindestens einer erfindungsgemäß verwendeten wässrigen Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer mit im Druckprozess gängigen Hilfsmitteln und mindestens einem Farbmittel her. Als Farbmittel seien beispielsweise genannt: Pigmente, Dispersfarbstoffe, Reaktivfarbstoffe, Säure- und Metallkomplexfarbstoffe und Küpenfarbstoffe.

Die Farbtiefe stellt man vorteilhaft durch Abstimmen des Verhältnisses Farbmittel zu nicht-farbigen Komponenten der betreffenden erfindungsgemäßen Druckpaste her, beispielsweise bei bindemittel-haltigen Druckpasten durch Abstimmen des Verhältnisses Bindemittel zu Farbmittel

In erfindungsgemäßen Pigmentdruckpasten wählt man als Farbmittel ein oder mehrere Pigmente.

Unter Pigmenten sind im Rahmen der vorliegenden Erfindung praktisch nicht lösliche, dispergierte feinteilige, organische oder anorganische Farbmittel gemäß der Definition in DIN 55944 zu verstehen. Bevorzugt wählt man mindestens organisches Pigment und/oder Metallpigment aus.

Beispielhaft ausgewählte organische Pigmente sind

| | |
|---|---|
| Monoazopigmente: | C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183; |
| Disazopigmente: | C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188; |
| Anthranthronpigmente: | C.I. Pigment Red 168 (C.I. Vat Orange 3); |
| Anthrachinonpigmente: | C.I. Pigment Yellow 147 und 177; C.I. Pigment Violet 31; |
| Anthrapyrimidinpigmente: | C.I. Pigment Yellow 108 (C.I. Vat Yellow 20); |
| Chinacridonpigmente: | C.I. Pigment Red 122, 202 und 206; C.I. Pigment Violet 19; |
| Chinophthalonpigmente: | C.I. Pigment Yellow 138; |
| Dioxazinpigmente: | C.I. Pigment Violet 23 und 37; |
| Flavanthronpigmente: | C.I. Pigment Yellow 24 (C.I. Vat Yellow 1); |
| Indanthronpigmente: | C.I. Pigment Blue 60 (C.I. Vat Blue 4) und 64 (C.I. Vat Blue 6), |
| Isoindolinpigmente: | C.I. Pigment Orange 69; C.I. Pigment Red 260; C.I. Pigment Yellow 139 und 185; |
| Isoindolinonpigmente: | C.I. Pigment Orange 61; C.I. Pigment Red 257 und 260; C.I. Pigment Yellow 109, 110, 173 und 185; |
| Isoviolanthronpigmente: | C.I. Pigment Violet 31 (C.I. Vat Violet 1); |
| Metallkomplexpigmente: | C.I. Pigment Yellow 117, 150 und 153; C.I. Pigment Green 8; |
| Perinonpigmente: | C.I. Pigment Orange 43 (C.I. Vat Orange 7); C.I. Pigment Red 194 (C.I. Vat Red 15); |
| Perylenpigmente: | C.I. Pigment Black 31 und 32; C.I. Pigment Red 123, 149, 178, 179 (C.I. Vat Red 23), 190 (C.I. Vat Red 29) und 224; C.I. Pigment Violet 29; |
| Phthalocyaninpigmente: | C.I. Pigment Blue 15,15:1. 15:2, 15:3,15:4.15:6 und 16; C.I. Pigment Green 7 und 36; |
| Pyranthronpigmente: | C.I. Pigment Orange 51; C.I. Pigment Red 216 (C.I. Vat Orange 4); |
| Thioindigopigmente: | C.I. Pigment Red 88 und 181 (C.I. Vat Red 1); C.I. Pigment Violet 38 (C.I. Vat Violet 3); |
| Triarylcarboniumpigmente: | C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz); C.I. Pigment Yellow 101 (Aldazingelb); C.I. Pigment Brown 22. |

Beispiele für besonders bevorzugte Pigmente sind: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Weitere geeignete Pigmente sind metallische Pigmente wie beispielsweise Goldbronze, Silberbronze, Iriodinpigmente, Glitter.

Der mittlere Durchmesser von im erfindungsgemäßen Verfahren eingesetztem Pigment liegt üblicherweise im Bereich von 20 nm bis 1,5 µm, bevorzugt im Bereich von 300 bis 500 nm.

In einer Ausführungsform der vorliegenden Erfindung liegt im erfindungsgemäßen Verfahren eingesetztes Pigment in sphärischer oder annährend sphärischer partikulärer Form vor, d.h. das Verhältnis längster Durchmesser zu kleinster Durchmesser liegt im Bereich von 1,0 bis 2,0, bevorzugt bis 1,5.

Pigment fügt man erfindungsgemäßen Druckpasten vorzugsweise in Form von Pigmentzubereitungen zu. Pigmentzubereitungen enthalten üblicherweise 20 bis 60 Gew.-% Pigment, weiterhin Wasser und eine oder mehrere oberflächenaktive Verbindungen, beispielsweise einen oder mehrere Emulgatoren, beispielhaft seien mehrfach alkoxylierte C₁₀-C₃₀-Alkanole genannt.

Wünscht man Druckpasten für den Transferdruck oder den Dispersionsdruck herzustellen, so wählt man als Farbmittel einen oder mehrere Dispersfarbstoffe.

Als Dispersfarbstoffe sind beispielsweise geeignet:
C.I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 179, 180, 181, 182, 183, 184, 184:1, 198, 200, 201, 202, 203, 204, 205, 206, 207, 208, 209, 210, 211, 212, 213, 214, 215, 216, 217, 218, 219, 220, 221, 222, 223, 224, 225, 226, 227 und 228;
C.I. Disperse Orange 1, 2, 3, 3:3, 4, 5, 6, 7, 8, 9, 10, 11, 12, 13, 14, 15, 16, 17, 18, 19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147 und 148;
C.I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86:1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 224, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 338, 339, 340, 341, 342, 343, 344, 346, 347, 348, 349, 352, 356 und 367;
C.I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 70, 81, 86, 87, 88, 89, 91, 92, 93, 94, 96 und 97;
C.I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349, 351 und 359;
C.I. Disperse Green 1, 2, 5, 6 und 9;
   C.I. Disperse Brown 1, 2, 3, 4, 4:1, 5, 7, 8, 9, 10, 11, 18, 19, 20 und 21;
   C.I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34 und 36.

Als Säure- und Komplexfarbstoffe sind beispielsweise geeignet:
C.I. Acid Yellow 17, 19, 25, 42, 54, 59, 74, 79, 99, 118, 119, 135, 158.1, 176, 184, 199, 204, 236, 241;
C.I. Acid Orange 3, 39, 67, 74, 89;
C.I. Acid Red 1, 17, 42, 111, 138, 151, 179, 183, 186, 214, 221, 225, 226, 227, 228, 249, 260, 266, 296, 299, 357, 262, 403, 415;
C.I. Acid Blue 25, 45, 62, 72, 74, 78, 80, 113, 130, 152, 158, 185, 193, 205, 209, 219, 233, 266, 342;
C.I. Acid Violet 48, 58, 90, 99, 103;
C.I. Acid Green 12, 25, 27, 28, 104, 108;
C.I. Acid Brown 33, 50, 254, 256, 257, 258, 275, 355;
C.I. Acid Black 26, 52, 61, 63, 107, 153, 187, 194;

Beispiele für Reaktivfarbstoffe sind Monochlortriazinfarbstoffe, beispielsweise C.I. Reactive Orange 13, weiterhin Vinyisulfon-, bi- und multifunktionelle Reaktivfarbstoffe. Unter den Reaktivfarbstoffen sind die Monochlortriazinfarbstoffe im Direktdruck und die Vinylsulfonfarbstoffe im 2-Phasendruck besonders bevorzugt.

Reaktivfarbstoffe sind für das Bedrucken von natürlichen und synthetischen Cellulosefaser wie beispielsweise Baumwolle, Viskose, Leinen und Seide besonders geeignet.

Wünscht man erfindungsgemäße Druckpasten für den Küpendruck herzustellen, so wählt man als Farbmittel einen oder mehrere Küpenfarbstoffe.

Als Küpenfarbstoffe sind beispielsweise geeignet:
C.I. Vat Yellow 2, 3, 4, 5, 9, 10, 12, 22, 26, 33, 37, 46, 48, 49 und 50, .
C.I. Vat Orange 1, 2, 5, 9, 11, 13, 15, 19, 26, 29, 30 und 31,
C. Vat Red 2, 10, 12, 13, 14, 16, 19, 21, 31, 32, 37, 41, 51, 52 und 61,
C.I. Vat Violet 2, 9, 13, 14, 15, 17 und 21,
C.I. Vat Blue 1, 3, 4, 5, 10, 12, 13, 14, 16, 17, 18, 19, 20, 22, 25, 26, 29, 30, 31, 35, 41, 42, 43, 64, 65, 66, 72 und 74,
C.I. Vat Green 1, 2, 3, 5, 7, 8, 9, 13, 14, 17, 26, 29, 30, 31, 32, 33, 40, 42, 43, 44 und 49,
C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84,
C.I. Vat Black 1, 2, 7, 8, 9, 13, 14, 16, 19, 20, 22, 25, 27, 28, 29, 30, 31, 32, 34, 36, 56, 57, 58, 63, 64 und 65.

Das Verhältnis Farbmittel zu erfindungsgemäß verwendeter wässriger Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer kann man in weiten Grenzen wählen. So ist es beispielsweise möglich, Farbmittel und erfindungsgemäß verwendete wässrige Dispersion von (Co)polymerisat von mindestens einem ethylenisch ungesättigten Monomer MON, beispielsweise von mindestens einem ethylenisch ungesättigtem anionischem Monomer in einem Gewichtsverhältnis von 20 : 1 bis 1 : 100 zu wählen. In einer bevorzugten Ausführungsform der vorliegenden Erfindung stellt man das Verhältnis Farbmittel, beispielsweise Pigment, zu erfindungsgemäß eingesetzter wässriger Formulierung so ein, dass das Gewichtsverhältnis von Pigment zu Feststoffanteile von erfindungsgemäß verwendeten wässrigen Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer im Bereich von 1 : 1 bis 1 : 20 liegt.

Natürlich ist es auch möglich, zunächst Farbmittel und erfindungsgemäß verwendeten wässrigen Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer in einem Gewichtsverhältnis im Bereich von 20 : 1 bis 10 : 1 vorzumischen und erst unmittelbar vor dem Druck weitere erfindungsgemäß eingesetzte wässrige Formulierung oder ein konventionelles Acrylatbindemittel zuzumischen.

Weitere gängige Hilfsmittel für Druckpasten im Textildruck sind aus Ullmann, Handbuch der technischen Chemie und Verfahrenstechnik bekannt, vergleiche beispielsweise Ullmann's Enyclopedia of Industrial Chemistry, 5. Auflage, Stichwort: Textile Auxiliaries, Bd. A26, S. 286 ff. und 296 ff., Verlag Chemie, Weinheim, Deerfield/Florida, Basel; 1996, und aus dem Textil-Hilfsmittel-Katalog, Konradin Verlag Robert Kohlhammer GmbH, D-70771 Leinfelden-Echterdingen. Als gängige Hilfsmittel seien Echtheitsverbesserer, Weichmacher, Griffverbesserer, Entschäumer, Netzmittel, Egalisiermittel, Wasserenthärter wie beispielsweise Komplexbildner, Harnstoff, Wirkstoffe wie beispielsweise Biozide oder Flammfestmittel, und Emulgatoren beispielhaft genannt:

Geeignete Echtheitsverbesserer sind beispielsweise bei Raumtemperatur flüssige Silikonöle und Polysiloxane. In einer bevorzugten Variante der vorliegenden Erfindung kann man auf den Einsatz von Echtheitsverbesserern verzichten.

Beispiele für geeignete Weichmacher sind Esterverbindungen, gewählt aus den Gruppen der mit Alkanolen vollständig veresterten aliphatischen oder aromatischen Di- oder Polycarbonsäuren und der mindestens einfach mit Alkanol veresterten Phosphorsäure.

In einer Ausführungsform der vorliegenden Erfindung handelt es sich bei Alkanolen um C₁-C₁₀-Alkanole.

Bevorzugte Beispiele für mit Alkanol vollständig veresterte aromatische Di- oder Polycarbonsäuren sind mit Alkanol vollständig veresterte Phthalsäure, Isophthalsäure und Mellithsäure; beispielhaft seinen genannt: Di-n-octylphthalat, Di-n-nonylphthalat, Di-n-decylphthalat, Di-n-octylisophthalat, Di-n-nonylisophthalat, Di-n-decylisophthalat.

Bevorzugte Beispiele für mit Alkanol vollständig veresterte aliphatische Di- oder Polycarbonsäuren sind beispielsweise Adipinsäuredimethylester, Adipinsäurediethylester, Adipinsäuredi-n-butylester, Adipinsäuredüsobutylester, Glutarsäuredimethylester, Glutarsäurediethylester, Glutarsäuredi-n-butylester, Glutarsäurediisobutylester, Bemsteinsäuredimethylester, Bemsteinsäurediethylester, Bemsteinsäuredi-n-butylester Bernsteinsäuredüsobutylester sowie Mischungen der vorstehend genannten Verbindungen.

Bevorzugte Beispiele für mindestens einfach mit Alkanol veresterte Phosphorsäure sind C₁-C₁₀-Alkyl-di-C₆-C₁₄-Aryl-Phosphate wie Isodecyldiphenylphosphat.

Weitere geeignete Beispiele für Weichmacher sind mindestens einfach mit C₁-C₁₀-Alkylcarbonsäure mindestens einfach veresterte aliphatische oder aromatische Di- oder Polyole.

Bevorzugtes Beispiel für mindestens einfach mit C₁-C₁₀-Alkylcarbonsäure veresterte aliphatische oder aromatische Di- oder Polyole ist 2,2,4-Trimethylpentan-1,3-diolmonoisobutyrat.

Weitere geeignete Weichmacher sind Polyester, erhältlich durch Polykondensation von aliphatischer Dicarbonsäure und aliphatischem Diol, beispielsweise Adipinsäure oder Bernsteinsäure und 1,2-Propandiol, vorzugsweise mit einem M_{w} von 200 g/mol, und Polypropylenglykolalkylphenylether, vorzugsweise mit einem M_{w} von 450 g/mol.

Weitere geeignete Weichmacher sind mit zwei verschiedenen Alkoholen veretherte Polypropylenglykole mit einem Molekulargewicht M_{w} im Bereich von 400 bis 800 g/mol, wobei vorzugsweise einer der Alkohole ein Alkanol, insbesondere ein C₁-C₁₀-Alkanol sein kann und der andere Alkohol vorzugsweise ein aromatischer Alkohol, beispielsweise o-Kresol, m-Kresol, p-Kresol und insbesondere Phenol sein kann.

Geeignete Entschäumer sind beispielsweise silikonhaltige Entschäumer wie beispielsweise solche der Formel HO-(CH₂)₃-Si(CH₃)[OSi(CH₃)₃]₂, nicht alkoxyliert oder mit bis zu 20 Äquivalenten Alkylenoxid und insbesondere Ethylenoxid alkoxyliert. Auch Silikonfreie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt Stearinsäure-C₁₀-C₂₀-alkylester, bei denen C₈-C₂₀-Alkyl, bevorzugt C₁₀-C₂₀-Alkyl unverzweigt oder verzweigt sein kann.

Geeignete Netzmittel sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Geeignete Egalisiermittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol. Ganz besonders bevorzugt sind Blockcopolymerisate aus Propylenoxid/Ethylenoxid beispielsweise der Formel EO₈PO₇EO₈, wobei EO für Ethylenoxid und PO für Propylenoxid steht.

Geeignete Komplexbildner sind beispielsweise das Tetranatriumsalz der Ethylendiamintetraessigsaäure und das Trinatriumsalz der Nitrilotriessigsäure.

In einer bevorzugten Ausführungsform der vorliegenden Erfindung enthalten erfindungsgemäßen Druckpasten als weitere Zusätze einen oder mehrere Emulgatoren. Beispiele für geeignete Emulgatoren sind aryl- oder alkylsubstituierte Polyglykolether, weiterhin Substanzen, die in US 4,218,218 beschrieben sind, und Homologe mit y (aus den Formeln aus US 4,218,218) im Bereich von 10 bis 37.

Weiterhin können erfindungsgemäße Druckpasten mindestens ein Bindemittel enthalten, bevorzugt mindestens eine wässrige Dispersion von mindestens einem filmbildenden Polymer, beispielsweise einem Polyacrylat, Polybutadien, Polyolefine wie beispielsweise Polyethylen oder Polypropylen, Polyurethan, vorzugsweise einem anionischen Polyurethan, oder Ethylen-Acrylsäure-Copolymer.

Polyacrylate im Sinne der vorliegenden Erfindung sind beispielsweise erhältlich durch Copolymerisation von mindestens einem Acrylsäure-C₁-C₁₀-Alkylester, beispielsweise Acrylsäuremethylester, Acrylsäureethylester, Acrylsäure-n-Butylester, Acrylsäure-2-ethylhexylester, mit mindestens einem weiteren Comonomer, beispielsweise einem weiteren Acrylsäure-C₁-C₁₀-Alkylester, Meth)acrylsäure, (Meth)acrylamid oder einer vinylaromatischen Verbindung wie beispielsweise Styrol.

Anionische Polyurethane im Sinne der vorliegenden Erfindung sind beispielsweise erhältlich durch Umsetzung von einem oder mehrere aromatischen oder vorzugsweise aliphatischen oder cycloaliphatischen Diisocyanat mit einem oder mehreren Polyesterdiolen.

Zur Herstellung von erfindungsgemäßen Druckpasten kann man beispielsweise so vorgehen, dass man Wasser und gegebenenfalls einen Entschäumer, beispielsweise einen Entschäumer auf Silikonbasis, verrührt. Danach kann man einen oder mehrere Emulgatoren und das oder die Pigmente zugeben.

Als nächstes kann man ein oder mehrere Bindemittel und danach einen oder mehrere Griffverbesserer zugeben, beispielsweise eine oder mehrere Silikonemulsionen.

Anschließend kann man eine oder mehrere erfindungsgemäß verwendete wässrige Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer hinzufügen und unter weiterem Vermischen, beispielsweise Rühren, homogenisieren. Man kommt üblicherweise mit verhältnismäßig kurzen Rührzeiten aus, beispielsweise 5 Sekunden bis 5 Minuten, bevorzugt 20 Sekunden bis 1 Minute bei Rührgeschwindigkeiten im Bereich von 1000 bis 3000 U/min.

Eine typische erfindungsgemäße Pigmentdruckpaste enthält, jeweils pro Kilogramm erfindungsgemäßer Druckpaste
- 0 bis 100 g,: bevorzugt 1 bis 5 g Emulgator,
- 1 bis 500 g: bevorzugt 3 bis 200 g erfindungsgemäß verwendete wässrige Dispersion von mindestens einem ethylenisch ungesättigten Monomer MON, beispielsweise von (Co)polymerisat von mindestens einem ethylenisch ungesättigtem anionischem Monomer oder von mindestens einem Stickstoff-haltigen wasserlöslichen ethylenisch ungesättigten Monomer,
- 0,1 bis 500 g,: bevorzugt bis 250 g, bevorzugt 0,5 bis 120 g Pigment,
- 0 bis 950 g: einer oder mehrere Polyacrylat-, Polybutadien-, Polyurethan- oder Polyolefindispersion als Bindemittel, bevorzugt 40 bis 800 g, besonders bevorzugt 60 bis 300 g
gegebenenfalls weitere Hilfsmittel;
der Rest ist bevorzugt Wasser.

Eine typische erfindungsgemäße Druckpaste für den Transferdruck oder den Dispersionsdruck enthält, jeweils pro Kilogramm erfindungsgemäßer Druckpaste

| | |
|---|---|
| 0 bis 100 g, | bevorzugt 1 bis 5 g Emulgator, |
| 1 bis 500 g, | bevorzugt 3 bis 100 g erfindungsgemäß verwendete wässrige Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer, |
| 0,1 bis 500 g, | bevorzugt bis 250 g, bevorzugt 0,5 bis 120 g Dispersfarbstoff, |

gegebenenfalls weitere Hilfsmittel;
der Rest ist bevorzugt Wasser.

Eine typische erfindungsgemäße Druckpaste für den Küpendruck enthält, jeweils pro Kilogramm erfindungsgemäßer Druckpaste

| | |
|---|---|
| 0 bis 100 g, | bevorzugt 1 bis 5 g Emulgator, |
| 1 bis 500 g, | bevorzugt 3 bis 100 g erfindungsgemäß verwendete wässrige Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer, |
| 0,1 bis 500 g, | bevorzugt bis 250 g, bevorzugt 0,5 bis 120 g Küpenfarbstoff, |

gegebenenfalls ein oder mehrere Reduktionsmittel,
gegebenenfalls weitere Hilfsmittel;
der Rest ist bevorzugt Wasser.

Textildruckverfahren unter Verwendung mindestens einer erfindungsgemäßen Druckpaste, beispielsweise einer erfindungsgemäßen Pigmentdruckpaste, einer erfindungsgemäßen Druckpaste für den Transferdruck, den Dispersionsdruck, den Druck mit Säure- und Metallkomplexfarbstoffen, den Reaktivdruck oder den Küpendruck kann man nach verschiedenen Verfahren durchführen werden, die an sich bekannt sind. In der Regel verwendet man eine Schablone, durch die man die erfindungsgemäße Druckpaste mit einer Rakel presst, also ein Siebdruckverfahren. Erfindungsgemäße Druckverfahren unter Verwendung mindestens einer erfindungsgemäßen Druckpaste liefern bedruckte Substrate, insbesondere Textil, mit besonders hoher Brillanz und Farbtiefe der Drucke bei gleichzeitig ausgezeichnetem Griff der bedruckten Substrate. Weiterer Gegenstand der vorliegenden Erfindung sind daher flexible Substrate, insbesondere Textil, bedruckt nach dem erfindungsgemäßen Druckverfahren unter Verwendung von mindestens einer erfindungsgemäßen Druckpaste.

Wünscht man das erfindungsgemäße Druckverfahren als Transferdruck durchzuführen, beispielsweise auf textile Substrate aus Polyacryl, Polyamid, Polyester/Wolle oder vorzugsweise Polyester, so geht man vorzugsweise nach dem Sublimations-Transferverfahren vor. Man bedruckt dazu Papier mit einer erfindungsgemäßen Druckpaste, enthaltend beispielsweise mindestens einen sublimierunechten Dispersionsfarbstoff. Anschließend behandelt man das so bedruckte Papier zusammen mit dem zu kolorierenden textilen Substrat auf mindestens einer heißen Presse oder mindestens einem heißen Kalander über einen Zeitraum von 15 bis 30 Sekunden bei 180 bis 220°C. Dabei sublimieren die sublimierunechten Dispersionsfarbstoffe auf das textile Substrat und werden dort fixiert.

Besonders geeignete sublimationsunechte Dispersionsfarbstoffe sind beispielsweise
C.I. Disperse Yellow 3, 54, 82;
C.I. Disperse Orange 25;
C.I. Disperse Pink 364;
C.I. Disperse Red 11, 60;
C.I. Disperse Rubine 375;
C.I. Disperse Turquoise 59;
C.I. Disperse Blue 14, 72, 289, 326, 332, 359;
C.I. Disperse Black 15, 65.

Man kann statt mindestens eines sublimierunechten Dispersionsfarbstoffs der erfindungsgemäßen Druckpaste für den Transferdruck als Farbmittel mindestens einen optischen Aufheller zusetzen, beispielsweise gewählt aus
C.I. Fluorescent Brightener 1, 9, 14, 17, 20, 22, 24, 28, 28:1, 30, 32, 37, 46, 47, 48, 49, 52, 54, 59, 61, 71, 79, 84, 85, 86, 87, 90, 90:1, 91, 104, 112, 113, 114, 117, 118, 119, 121, 123, 124, 130, 132, 134, 135, 136, 140, 144, 145, 146, 147, 148, 152, 153, 154, 162:1, 166, 167, 169, 170, 171, 173, 175, 176, 177, 179, 184, 184:1, 184:2, 185, 185:1, 185:2, 190, 191, 192, 194, 195, 196, 199, 200, 205, 210, 216,217, 217:1, 218, 219, 219:1, 220, 222, 223, 224, 225, 226, 228, 229, 230, 231, 232, 234, 235, 236, 238, 239, 241, 242, 251, 252, 254, 257, 258, 261, 262, 263, 264, 265, 266, 267, 269, 271, 27.2, 273, 274, 275, 276, 277, 278, 279, 280, 289, 290, 291, 310, 311, 312, 313, 314, 315, 318, 321, 322, 326, 327, 328, 330, 332, 335, 336, 337, 338, 339, 340, 351, 352, 353, 354, 355, 357, 362, 363, 364, 365, 366, 367, 368, 369, 370, 371, 371:1, 372, 373, 374, 374:1, 375, 376, 377, 378, 379, 380, 381, 382, 383, 384, 385, 386, 387 und 388.

Wünscht man das erfindungsgemäße Druckverfahren als Dispersionsdruck durchzuführen, so bedruckt man das zu kolorierende textile Substrat direkt unter Verwendung von mindestens einer erfindungsgemäßen Druckpaste für den Dispersionsdruck. Anschließend an den Druck kann man fixieren.

Wünscht man das erfindungsgemäße Druckverfahren als Küpendruck durchzuführen, so kann man es beispielsweise als RC-Verfahren (Rongalit-Pottasche-Verfahren) oder als Zweiphasendruckverfahren (kurz 2PH-Verfahren) ausführen.

Wünscht man das erfindungsgemäße Druckverfahren als RC-Verfahren durchzuführen, so setzt man Hilfsmittel und ein Reduktionsmittel der erfindungsgemäßen Druckpaste zugesetzt. Nach dem Drucken führt man zur Fixierung des Farbstoffs einen Dämpfvorgang aus.

Geeignete Reduktionsmittel sind beispielsweise Na₂S₂O₄ ("Hydrosulfit") und Sulfinsäure und Alkalimetallsalze von Sulfinsäuren. Beispielhaft genannt sei das Natriumsalz von Nitrilomethansulfinsäure.

Besonders bevorzugt ist das RC-Verfahren im Ätzdruck. Zur erfindungsgemäßen Durchführung des RC-Verfahrens im Ätzdruck bedruckt man mit einem oder mehreren ätzbaren Farbstoffen, beispielsweise mit einem oder mehreren Reaktiv-, Direkt-, Schwefel, Naphtholfarbstoffen vorgefärbte Ware mit erfindungsgemäßer Druckpaste für den Küpendruck und ätzt anschließend den Fond an den bedruckten Stellen mit einem oder mehreren der oben genannten Reduktionsmittel weg.

Wünscht man das erfindungsgemäße Druckverfahren als Zweiphasenverfahren durchzuführen, so druckt man zunächst mit einer Druckpaste, die im wesentlichen mindestens eine wässrige Dispersionen von (Co)polymerisaten von mindestens einem ethylenisch ungesättigten Monomer MON und mindestens einen Küpenfarbstoff enthält. Nach dem Drucken bringt man mit Hilfe eines Foulards ein oder mehrere Reduktionsmittel zusammen mit Alkali auf und dämpft danach sofort.

Als textile Substrate besonders geeignet zur Durchführung des erfindungsgemäßen Küpendruckverfahrens sind Substrate aus natürlicher oder synthetischer Cellulose oder aus Seide.

An den eigentlichen Druckschritt insbesondere im Pigmentdruck schließt sich üblicherweise eine thermische Trocknung und Fixierung an, bevorzugt trocknet man bei Temperaturen im Bereich von beispielsweise 50 bis 140°C über einen Zeitraum von 30 Sekunden bis 3 Minuten und fixiert anschließend bei Temperaturen im Bereich von 145°C bis 200°C über einen Zeitraum von 30 Sekunden bis 5 Minuten in an sich bekannten Geräten, zum Beispiel Trockenschränken, Fixierschränken, Spannrahmen, Vakuumtrockenschränken.

Erfindungsgemäße Druckverfahren unter Verwendung von erfindungsgemäßen Druckpasten lassen sich besonders gut ausführen. Beispielhaft sei genannt, dass sich sehr scharfe Konturen mittels sehr feinen Schablonen drucken lassen. Erfindungsgemäße Druckverfahren lassen sich mit hohem Substratdurchlauf, insbesondere hoher Durchlaufgeschwindigkeit von textilem Substrat betreiben, beispielsweise 100 m Textil/min und mehr.

Erfindungsgemäße Druckpasten zeichnen sich weiterhin durch eine sehr gute Elektrolytstabilität aus. Erfindungsgemäße Druckpasten zeichnen sich weiterhin durch einen sehr geringen Gehalt an Quellkörpem aus, oder es sind keinerlei Quellkörper detektierbar.

Ein weiterer Gegenstand der vorliegenden Erfindung sind textile Substrate, bedruckt nach einem erfindungsgemäßen Verfahren. Erfindungsgemäße Substrate zeichnen sich durch brillante Farben aus, weiterhin durch angenehmen Griff. Weiterhin haben erfindungsgemäße Substrate einen oberflächigen Druck, d.h. geringere Penetration der Druckfarbe in das betreffende Substrat. So werden besonders scharfe Konturen der bedruckten Muster oder Bilder erreicht.

Ein weiterer Gegenstand der vorliegenden Erfindung ist ein erfindungsgemäßes Färbeverfahren. Das erfindungsgemäße Färbeverfahren führt man vorzugsweise so aus, dass man mindestens ein textiles Substrat mit mindestens einer erfindungsgemäßen Färbeflotte behandelt.

Erfindungsgemäße Färbeflotten können als Zusatz Netzmittel enthalten, bevorzugt wenn die Netzmittel als schaumarm gelten, da bei den hohen Turbulenzen im Färbeprozess Schaumbildung die Qualität der Färbung durch Bildung von Unegalitäten beeinträchtigt wird.

Geeignete Netzmittel sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Trockene textile Gewebe, Garne, Filamente, Gewirke oder Vliese, wie sie in der kontinuierlichen Pigmentfärbung eingesetzt werden, enthalten eine große Menge von Luft. Zur Durchführung des erfindungsgemäßen Pigmentfärbeverfahrens ist daher der Einsatz von Entlüftern vorteilhaft. Diese basieren beispielsweise auf Polyethersiloxan-Copolymeren. Sie können in Mengen von 0,01 bis 2 g/l in den erfindungsgemäßen Färbeflotten enthalten sein.

Weiterhin können erfindungsgemäße Färbeflotten Antimigrationsmittel enthalten. Geeignete Antimigrationsmittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol.

Weiterhin kann man den erfindungsgemäßen Färbeflotten als Zusatz einen oder mehrere Griffverbesserer zusetzen. Hierbei handelt es sich in der Regel um Polysiloxane oder um Wachse. Polysiloxane haben hierbei den Vorteil der Permanenz, während die Wachse langsam während des Gebrauchs ausgewaschen werden.

Erfindungsgemäße Färbeflotten weisen üblicherweise einen schwach sauren pH-Wert auf, vorzugsweise im Bereich von 4 bis 6,5, oder einen schwach alkalischen pH-Wert, beispielsweise im Bereich von 7,1 bis 9,5, eingestellt beispielsweise mit Ammoniak. Die Viskositäten von erfindungsgemäßen Färbeflotten liegen bevorzugt im Bereich von unter 100 mPa·s. Die Oberflächenspannungen von erfindungsgemäßen Färbeflotten sind so einzustellen, dass ein Benetzen der Ware möglich ist. Geeignet sind beispielsweise Oberflächenspannungen von kleiner 50 mN/m bei 23°C.

In einer Ausführungsform der vorliegenden Erfindung enthält eine typische erfindungsgemäße Färbeflotte pro Liter
0 bis 500 g, bevorzugt 10 bis 200 g an Bindemittel,
1 bis 500 g, bevorzugt 3 bis 100 g erfindungsgemäß verwendete wässrige Dispersion von (Co)polymerisat von mindestens einem ethylenisch ungesättigten Monomer MON, beispielsweise von mindestens einem ethylenisch ungesättigtem anionischem Monomer oder von mindestens einem Stickstoff-haltigen wasserlöslichen ethylenisch ungesättigten Monomer,
0 bis 100 g, bevorzugt 0,1 bis 10 g Netzmittel,
0 bis 100 g, bevorzugt 0,1 bis 10 g Entschäumer,
0 bis 300 g, bevorzugt 1 bis 20 g Antibelagsmittel,
0 bis 100 g, bevorzugt 1 bis 50 g Antimigrationsmittel,
0 bis 100 g, bevorzugt 1 bis 50 g Egalisiermittel,
0,5 bis 25 g, bevorzugt 1 bis 12 g Pigment.

Ein weiterer Aspekt der vorliegenden Erfindung ist die Verwendung der erfindungsgemäß verwendeten wässrigen Dispersionen von (Co)polymerisaten von mindestens einem ethylenisch ungesättigten Monomer MON als Antimigrationsmittel oder Egalisiermittel in Färbeflotten.

Ein weiterer Aspekt der vorliegenden Erfindung ist ein Verfahren zur Herstellung erfindungsgemäßer Färbeflotten. Das erfindungsgemäße Verfahren umfasst das Vermischen von Farbmittel, beispielsweise Pigment, vorzugsweise in Form von Pigmentzubereitungen, die neben Pigment und Wasser ein oder mehrere oberflächenaktive Verbindungen enthalten, mit oben aufgeführten Zusätzen wie weiteren Lösemitteln, Entschäumem, Griffverbesserern, Emulgatoren und/oder Bioziden und Auffüllen mit Wasser. Zur Ausübung des Verfahrens zur Herstellung von erfindungsgemäßen Färbeflotten verrührt man üblicherweise die Komponenten der erfindungsgemäßen Färbeflotten in einem Mischbehälter, wobei Größe und Form des Mischbehälters unkritisch sind. Bevorzugt schließt sich an das Verrühren eine Klärfiltration an.

Ein weiterer Aspekt der vorliegenden Erfindung ist ein Verfahren zum Färben von flexiblen Substraten unter Verwendung der oben beschriebenen erfindungsgemäßen Färbeflotten, im Folgenden auch als erfindungsgemäßes Färbeverfahren, insbesondere als erfindungsgemäßes Pigmentfärbeverfahren bezeichnet. Das erfindungsgemäße Färbeverfahren kann in gängigen Färbemaschinen durchgeführt werden. Bevorzugt sind Foulards, die als wesentliches Element zwei aufeinandergepresste Rollen enthalten, durch die flexibles Substrat und insbesondere Textil geführt wird. Oberhalb der Rollen ist erfindungsgemäße Färbeflotte eingefüllt und benetzt flexibles Substrat bzw. das Textil. Durch den Druck der Rollen wird das flexible Substrat bzw. das Textil abgequetscht und ein konstanter Auftrag gewährleistet.

An den eigentlichen Färbeschritt schließt sich üblicherweise eine thermische Trocknung und optional eine Fixierung an. Bevorzugt trocknet man bei Temperaturen von 25 bis 300°C über einen Zeitraum von 10 Sekunden bis 60 Minuten, bevorzugt 30 Sekunden bis 10 Minuten. Wenn man zu fixieren wünscht, so fixiert man bei Temperaturen von 140°C bis 200°C über einen Zeitraum von 30 Sekunden bis 5 Minuten.

Bevorzugt ist ein erfindungsgemäßes Verfahren zur Pigmentfärbung nach dem Klotzprozess.

Erfindungsgemäß gefärbte Substrate und insbesondere Textil zeichnen sich durch sehr gute Egalität, brillante Farben und hervorragende Farbausbeute aus. Ein weiterer Aspekt der vorliegenden Erfindung sind daher Substrate, insbesondere Textil, gefärbt nach dem oben beschriebenen Verfahren unter Verwendung mindestens einer erfindungsgemäßen Färbeflotte (C).

Ein weiterer Aspekt der vorliegenden Erfindung ist die Verwendung von erfindungsgemäß eingesetzten wässrigen Dispersionen von (Co)polymerisaten von mindestens einem ethylenisch ungesättigten Monomer MON zur Herstellung von Beschichtungsmitteln (D) und Ausrüstungsflotten (E). Ein weiterer Aspekt der vorliegenden Erfindung sind Beschichtungsmittel (D) und Ausrüstungsflotten (E), hergestellt unter Verwendung von eingangs definierten wässrigen Dispersionen. Ein weiterer Aspekt der vorliegenden Erfindung ist ein Verfahren zur Beschichtung oder Ausrüstung von Textil unter Verwendung von erfindungsgemäßen Beschichtungsmitteln (D) bzw. erfindungsgemäßen Ausrüstungsflotten (E). Beschichtungsmittel (D) können beispielsweise auch zum Zweck der Kaschierung aufgetragen werden.

Unter Beschichtung von Textil wird im Folgenden das nicht-permanente oder bevorzugt dauerhafte Auftragen von Stoffen, vorzugsweise synthetischen oder natürlichen organischen Polymeren, auf textiles Substrat verstanden, siehe auch Substrat- und Textilbeschichtung, Praxiswissen für Textil-, Bekleidungs- und Beschichtungsbetriebe, Andreas Giessmann, Springer-Verlag Berlin Heidelberg 2003). Je nach Ausgestaltung des Verfahrens kann man den Stoff, bevorzugt das oder die synthetischen oder natürlichen organischen Polymeren, formuliert als Paste, Dispersion, Emulsion, Plastisol, Organisol oder Schmelze auf textiles Substrat auftragen. Als Bindemittel kann man sowohl Dispersionen, Emulsionen als auch Organisole von Polyacrylaten, Polyurethanen, Polybutadien, Polyolefinen wie Polyethylen oder Polypropylen und deren Copolymere verwenden. Man trägt mittels eines Auftragssystems auf, beispielsweise Foulard, Walzenrakel, Luftrakel, Gummituchrakel, Stützrakel, Tischrakel, Spiralrakel, Kastenrakel, Kommabar, Reverse-Roll-Coater, Contra-Coater, Roll-Coater und Raster Roller, Kiss-Coater, Rotationssiebdruck, Pulverbeschichtung, Spritzen, Tauchen und Imprägnieren, Punkt- und Doppelpunktbeschichtung, Schaumbeschichtung. Der Zweck einer, Beschichtung bzw. einer Kaschierung können ästhetische oder funktionelle Gründe sein.

In einer Ausführungsform der vorliegenden Erfindung enthält ein typisches erfindungsgemäßes Beschichtungsmittel (D), jeweils pro Kilogramm erfindungsgemäßes Beschichtungsmittel,

| | |
|---|---|
| 1 bis 995 g, | wässrigen Dispersionen von (Co)polymerisaten von mindestens einem ethylenisch ungesättigten Monomer MON, |
| 0 bis 975g, | bevorzugt 20 bis 800 g eine wässrige Dispersion von mindestens einem filmbildenden Polymer, beispielsweise einem Polyacrylat, Polybutadien, Polyurethan, vorzugsweise einem anionischen Polyurethan, oder Ethylen-Acrylsäure-Copolymer, Polyvinylchlorid, Polyolefinen wie beispielsweise Polyethylen oder Polypropylen, gegebenenfalls weitere Hilfsmittel und Additive, wie: Ammoniak, Entschäumer, Emulgatoren, natürliche oder synthetische Verdickungsmittel, Vernetzer, Echtheitsverbesserer, Weichmacher, Füllmittel, Farbmittel oder wirkstoffhaltige Formulierungen, |

der Rest ist bevorzugt Wasser.

Ausrüstungsverfahren im Sinne der vorliegenden Erfindung gehören zu den Textilveredlungsprozessen, deren Ziel ist es, z. B. die vorbehandelte (gebleichte), gefärbte oder bedruckte Substrate in einen verkaufs- und konfektionsfähigen Zustand zu bringen. Man unterscheidet zwischen mechanischen, nicht permanenten und waschpermanenten Ausrüstungsverfahren, bei denen meist bahnenförmige Web- oder Maschenware oder Vliese kontinuierlich behandelt wird. Der wichtigste Teil ist die chemische Ausrüstung, die auch als Hochveredlung oder Pflegeleichtausrüstung bezeichnet wird. Unter den Begriff Hochveredlung fallen beispielsweise Bügelfrei-, Knitterfrei-, Krumpffrei-, Easy-care- und Wash-and-wear-Ausrüstung. Hochveredlungsmittel sind Chemikalien, die mit sich selbst reagieren und z.B. die Cellulose-Moleküle zumindest partiell vernetzen. Beispiele für Hochveredlungsmittel sind N,N'-Dimethylol-4,5-dihydroxyethylenharnstoff ("DMDHEU") sowie Veretherungsprodukte von DMDHEU mit einem oder mehreren Äquivalenten C₁-C₄-Alkanol oder mit einem oder mehreren Äquivalenten Ethylenglykol, Diethylenglykol, Triethylenglykol oder Polyethylenglykol, Dimere von DMDHEU, DMeDHEU,

In einer Ausführungsform der vorliegenden Erfindung enthält eine erfindungsgemäße Ausrüstungsflotte (E), jeweils pro Liter erfindungsgemäßer Ausrüstungsflotte

| | |
|---|---|
| 1 bis 1000 g, | bevorzugt 3 bis 200 g, besonders bevorzugt 5 bis 15 g wässrige Dispersion von (Co)polymerisat von mindestens einem ethylenisch ungesättigten Monomer MON, |
| 0 bis 999 g, | bevorzugt 10 bis 200 g, besonders bevorzugt 80 g eines Vernetzers beispielsweise auf Basis von N,N'-Dimethylol-4,5-dihydroxyethylenhamstoff ("DMDHEU") oder Veretherungsprodukte von DMDHEU mit einem oder mehreren Äquivalenten C₁-C₄-Alkanol oder mit einem oder mehreren Äquivalenten Ethylenglykol, Diethylenglykol, Triethylenglykol oder Polyethylenglykol, Dimere von DMDHEU, DMeD-HEU, gegebenenfalls weitere Hilfsmittel und Additive, wie: Entschäumer, Netzmittel, Bindemittel, Katalysatoren, Säurespender, Echtheitsverbesserer, Weichmacher, Farbmittel oder wirkstoffhaltige Formulierungen, |

der Rest ist bevorzugt Wasser.

Wünscht man die Beschichtung als Schaumbeschichtung auszuführen, so setzt man erfindungsgemäßen Beschichtungsmitteln (D) mindestens ein Aufschäummittel zu. Besonders geeignet sind Mischungen von Ammoniumstearat und 1,3-Bis(2,6-Dimethylphenoxy)-2-propanol x 18 Ethylenoxid, beispielsweise in einem Mischungsverhältnis von 1:1 (Gewichtsanteile).

Ein weiterer Gegenstand der vorliegenden Erfindung sind Pigmentzubereitungen, enthaltend mindestens eine wässrige Dispersionen von (Co)polymerisaten von mindestens einem ethylenisch ungesättigten Monomer MON,
dadurch gekennzeichnet, dass mindestens eine wässrige Dispersion in Gegenwart mindestens eines wasserlöslichen Polymeren hergestellt sind, wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
   (β1) einem oder mehreren nichtionischen monoethylenisch ungesättigten Monomeren,
   (β2) einem oder mehreren kationischen monoethylenisch ungesättigten Monomeren,
   (β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

Vorzugsweise wählt man mindestens ein Pigment aus den vorstehend beschriebenen Pigmenten und mindestens eine wässrige Dispersionen von (Co)polymerisaten von mindestens einem ethylenisch ungesättigten Monomer MON aus den vorstehend beschriebenen wässrigen Dispersionen von (Co)polymerisaten von mindestens einem ethylenisch ungesättigten Monomer MON.

Erfindungsgemäße Pigmentzubereitungen können weiterhin mindestens eine oberflächenaktive Substanz enthalten, beispielsweise mindestens einen mehrfach ethoxylierten Fettalkohol.

In einer Ausführungsform der vorliegenden Erfindung enthalten erfindungsgemäße Pigmentzubereitungen im Bereich von 0,1 bis 20 Gew.%, bevorzugt 0,2 bis 6 Gew.-% und besonders bevorzugt 0,5 bis 3 Gew.-% mindestens einer wässrigen Dispersion von (Co)polymerisaten von mindestens einem ethylenisch ungesättigten Monomer MON.

Erfindungsgemäße Pigmentzubereitungen kann man nach an sich bekannten Methoden herstellen, beispielsweise durch Vermischen. Geeignete Geräte zum Vermischen sind beispielsweise Kugelmühlen und Rührwerkskugelmühlen.

Dabei ist es möglich, wässrige Dispersionen von (Co)polymerisat von mindestens einem ethylenisch ungesättigten Monomer MON schon während des Vermischens in einer Kugelmühle oder Rührwerkskugelmühle zuzugeben oder beispielsweise zunächst alle übrigen Ingredienzien, beispielsweise Pigment und Wasser und gegebenenfalls oberflächenaktive Substanz, in beispielsweise einer Kugelmühle oder Rührwerkskugelmühle zu vermischen und erst danach wässrige Dispersionen von (Co)polymerisaten von mindestens einem ethylenisch ungesättigten Monomer MON zuzusetzen.

Erfindungsgemäße Pigmentzubereitungen zeichnen sich durch besondere Stabilität gegen Sedimentation aus und lassen sich beispielsweise zur Herstellung von Druckpasten verwenden, die ebenfalls Gegenstand der vorliegenden Erfindung sind, besonders zur Herstellung von Druckpasten für den Textildruck.

Insbesondere ist der Gegenstand durch den Ansprüchen definiert.

### Beispiele

### Allgemeine Vorbemerkungen:

Die K-Werte von (Co)polymerisaten wurden nach H. Fikentscher, Cellulose-Chemie, Band 13, 58 - 64 und 71 - 74 (1932) in 5 Gew.-% wässriger Kochsalzlösung bei 25°C, einer (Co)polymerisat-Konzentration von 0,1 Gew.-% und einem pH-Wert von 7 bestimmt.
Die Viskosität von erfindungsgemäß verwendeten wässrigen Dispersionen wurde jeweils in einem Brookfield-Viskosimeter mit einer Spindel Nr. 4 bei 20 U/min und einer Temperatur von 20°C gemessen. Falls nicht anders angegeben, bedeuten die Angaben in % Gewichtsprozent.

Die in den Beispielen verwendeten wasserlöslichen Polymeren (Stabilisatoren) hatten folgende Zusammensetzung:

| | |
|---|---|
| (a.1.1): | wässrige Lösung von Pfropfpolymerisat von Vinylacetat auf Polyethylenglykol des Molekulargewichts Mₙ 6000 g/mol (Gewichtsverhältnis: Vinylacetat : Polyethylenglykol 1 : 1), Polymerkonzentration 20% |
| (b.1.1): | wässrige Lösung von hydrolysiertem Copolymerisat aus Vinylmethylether und Maleinsäureanhydrid (Gewichtsverhältnis: 1 : 1, im wesentlichen alternierend), Molekulargewicht Mₙ 70.000 g/mol, freie Carboxylgruppen, Copolymerisatkonzentration 35% |

### Beispiel I. Herstellung von erfindungsgemäß verwendeten wässrigen Dispersionen

### Beispiel I.1 Herstellung von erfindungsgemäß verwendeter wässriger Dispersion D-I.1

In einem 2 l fassenden Vierhalskolben, der mit einem Teflonrührer und einer Vorrichtung für das Arbeiten unter Stickstoff ausgerüstet war, wurden unter Durchleiten von Stickstoff
449 g (a.1.1),
257 g (b.1.1) und
102,5 g vollständig entsalztes Wasser
vorgelegt und mit einer Drehzahl von 300 U/min über einen Zeitraum von 10 Minuten gerührt. Zu dieser Lösung tropfte man innerhalb von 10 Minuten 60 g frisch destillierte Acrylsäure und erwärmte danach die erhaltene Mischung auf 60°C. Anschließend fügte man über einen Zeitraum von 3½ Stunden eine Lösung von 90 g frisch destillierter Acrylsäure und 1,5 g Verbindung I.1 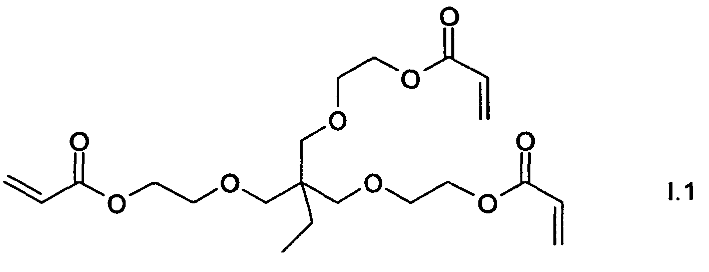 zu. Gleichzeitig mit dem Beginn der Zugabe von Acrylsäure und Verbindung I.1 begann man mit der Zugabe einer Lösung von 0,15 g 2,2'-Azobis(N,N'-dimethylenisobutyramidine)dihydrochlorid (Azostarter VA-044) in 40 g Wasser. Die Zugabe der Lösung des Azostarter VA-044 war nach 4 Stunden beendet. Nach beendeter Zugabe von Azostarter VA-044 rührte man noch 30 Minuten bei 60°C. Das Reaktionsgemisch wurde danach mit 0,015 g Azostarter VA-044 versetzt und 1 Stunde bei 60°C nachpolymerisiert. Man kühlte danach auf Zimmertemperatur ab und erhielt wässrige Dispersion D-I.1 mit einem Feststoffgehalt von 15 %. Sie hatte einen pH-Wert von 4 und eine Viskosität von 5350 mPa·s. Das Polymerisat hatte einen K-Wert von 120,7.

Die Teilchendurchmesserverteilung der dispergierten Teilchen der wässrigen Dispersion D-I.1 betrug 3 bis 8 µm.

### Beispiel I.2 Herstellung von erfindungsgemäß verwendeter wässriger Dispersion D-I.2

Beispiel I.1 wurde wiederholt, jedoch setzte man zum Starten der Polymerisation 0,135 g Azostarter VA-044 statt 0,15 g Azostarter VA-044 ein. Man erhielt wässrige Dispersion D-I.2 mit einem Feststoffgehalt von 15%. Sie hatte einen pH-Wert von 4 und eine Viskosität von 5550 mPa·s.

### Beispiel I.3 Herstellung von erfindungsgemäß verwendeter wässriger Dispersion D-I.3

Beispiel I.1 wurde wiederholt, man ersetzte jedoch die Verbindung der Formel I.1 durch 1,5 g Triallylamin. Man erhielt wässrige Dispersion D-I.3 mit einer Viskosität von 10.250 mPa·s. Sie hatte einen pH-Wert von 4.

Die Teilchendurchmesserverteilung der dispergierten Teilchen der wässrigen Dispersion D-I.3 betrug 5 bis 60 µm.
II. Formulierung von erfindungsgemäßen Druckpasten
II.1 Herstellung von Pigmentzubereitungen
II.1.1 Herstellung einer blauen Pigmentzubereitung

In einer Rührwerkskugelmühle Drais Superflow DCP SF 12 wurden miteinander vermahlen:

| | |
|---|---|
| 1800 g | Pigment Blue 15:3 |
| 450 g | n-C₁₈H₃₇O(CH₂CH₂O)₂₅H |
| 3700 g | destilliertes Wasser |

Das Vermahlen wurde fortgesetzt, bis die Pigmentpartikel einen mittleren Durchmesser von 320 nm aufwiesen. Man erhielt eine blaue Pigmentzubereitung P1.

### II.1.2 Herstellung einer roten Pigmentzubereitung

In einer Rührwerkskugelmühle Drais Superflow DCP SF 12 wurden miteinander vermahlen:

| | |
|---|---|
| 1800 g | Pigment Red 122 |
| 450 g | n-C₁₈H₃₇O(CH₂CH₂O)₂₅H |
| 3700 g | destilliertes Wasser |

Das Vermahlen wurde fortgesetzt, bis die Pigmentpartikel einen mittleren Durchmesser von 350 nm aufwiesen. Man erhielt eine rote Pigmentzubereitung P2.

### II.1.3 Herstellung einer violetten Pigmentzubereitung

In einer Rührwerkskugelmühle Drais Superflow DCP SF 12 wurden miteinander vermahlen:

| | |
|---|---|
| 1800 g | Pigment Violett 23 |
| 450 g | n-C₁₈H₃₇O(CH₂CH₂O)₂₅H |
| 3700 g | destilliertes Wasser |

Das Vermahlen wurde fortgesetzt, bis die Pigmentpartikel einen mittleren Durchmesser von 350 nm aufwiesen. Man erhielt eine violette Pigmentzubereitung P3.

### II.1.4 Herstellung einer erfindungsgemäßen blauen Pigmentzubereitung

In einer Rührwerkskugelmühle Drais Superflow DCP SF 12 wurden miteinander vermahlen:

| | |
|---|---|
| 1800 g | Pigment Blue 15:3 |
| 450 g | n-C₁₈H₃₇O(CH₂CH₂O)₂₅H |
| 3700 g | destilliertes Wasser |
| 90 g | D-I.3. |

Das Vermahlen wurde fortgesetzt, bis die Pigmentpartikel einen mittleren Durchmesser von 320 nm aufwiesen. Man erhielt erfindungsgemäße blaue Pigmentzubereitung P4.

### II.1.5 Herstellung einer erfindungsgemäßen roten Pigmentzubereitung

In einer Rührwerkskugelmühle Drais Superflow DCP SF 12 wurden miteinander vermahlen:

| | |
|---|---|
| 1800 g | Pigment Red 122 |
| 450 g | n-C₁₈H₃₇O(CH₂CH₂O)₂₅H |
| 3700 g | destilliertes Wasser |
| 90 g | D-I.3. |

Das Vermahlen wurde fortgesetzt, bis die Pigmentpartikel einen mittleren Durchmesser von 350 nm aufwiesen. Man erhielt erfindungsgemäße rote Pigmentzubereitung P5.

### II.1.6 Herstellung einer erfindungsgemäßen roten Pigmentzubereitung

In einer Rührwerkskugelmühle Drais Superflow DCP SF 12 wurden miteinander vermahlen:

| | |
|---|---|
| 1800 g | Pigment Violett 23 |
| 450 g | n-C₁₈H₃₇O(CH₂CH₂O)₂₅H |
| 3700 g | destilliertes Wasser |
| 90 g | D-I.3. |

Das Vermahlen wurde fortgesetzt, bis die Pigmentpartikel einen mittleren Durchmesser von 350 nm aufwiesen. Man erhielt erfindungsgemäße violette Pigmentzubereitung P6.

### 11.1.7 Herstellung einer erfindungsgemäßen blauen Pigmentpräparation P7

In einer Rührwerkskugelmühle Drais Superflow DCP SF 12 wurden miteinander vermahlen:

| | |
|---|---|
| 1800 g | Pigment Blue 15:3 |
| 450 g | n-C₁₈H₃₇O(CH₂CH₂O)₂₅H |
| 3700 g | destilliertes Wasser |

Das Vermahlen wurde fortgesetzt, bis die Pigmentpartikel einen mittleren Durchmesser von 320 nm aufwiesen. Anschließend wurde die so hergestellte Präparation mit 90 g
D-I.3 gründlich verrührt.
Man erhielt erfindungsgemäße blaue Pigmentpräparation P7.

### II.1.8 Herstellung einer erfindungsgemäßen roten Pigmentpräparation P8

In einer Rührwerkskugelmühle Drais Superflow DCP SF 12 wurden miteinander vermahlen:

| | |
|---|---|
| 1800 g | Pigment Red 122 |
| 450 g | n-C₁₈H₃₇O(CH₂CH₂O)₂₅H |
| 3700 g | destilliertes Wasser |

Das Vermahlen wurde fortgesetzt, bis die Pigmentpartikel einen mittleren Durchmesser von 350 nm aufwiesen. Anschließend wurde die so hergestellte Präparation mit 72 g wässriger Ammoniaklösung (25 Gew.-%) und 90 g D-I.3 gründlich verrührt.
Man erhielt erfindungsgemäße rote Pigmentpräparation P8.

### II.1.9 Herstellung einer erfindungsgemäßen violetten Pigmentpräparation P9

In einer Rührwerkskugelmühle Drais Superflow DCP SF 12 wurden miteinander vermahlen:

| | |
|---|---|
| 1800 g | Pigment Violett 23 |
| 450 g | n-C₁₈H₃₇O(CH₂CH₂O)₂₅H |
| 3700 g | destilliertes Wasser |

Das Vermahlen wurde fortgesetzt, bis die Pigmentpartikel einen mittleren Durchmesser von 350 nm aufwiesen. Anschließend wurde die so hergestellte Präparation mit 90 g
D-1.3 gründlich verrührt.
Man erhielt erfindungsgemäße violette Pigmentpräparation P9.

### II.2 Herstellung von erfindungsgemäßen Druckpasten

### II.2.1 Herstellung von erfindungsgemäßer Druckpaste DP2.1

Man vermischte miteinander: 731 g entmineralisiertes Wasser,
2 g einer 70 Gew.-% Lösung von Stearinsäure-isodecylester in C₁₂H₂₆ (Isomerengemisch)
12 g wässrige Ammoniaklösung (25 Gew.-%),
5 g eines Addukts von 1,3-Bis(2,6-Dimethylphenoxy)-2-propanol und 18 Äquivalenten Ethylenoxid als Emulgator,
150 g einer Polyacrylatdispersion, Feststoffgehalt 40%, (Polymerisat: 64 mol-% n-Butylacrylat und 36 mol-% Styrol, dynamische Viskosität: 50 mPa·s bei 23°C),
7 g 80 Gew.-% wässrige Lösung eines Hexamethoxymethylmelamin-Harzes,
3 g Polydimethylsiloxan mit Mₙ 3000 g/mol,
60 g D-I.3,
30 g blaue Pigmentzubereitung P1

Man verrührte 30 Sekunden mit einem Schnellrührer bei 2000 U/min und erhielt zügige, agglomeratfreie erfindungsgemäße Druckpaste DP2.1. Die Dynamische Viskosität betrug 35 dPa·s, gemessen mit einem Viscotester VT02 der Fa. Haake.

### II.2.2 Herstellung von erfindungsgemäßer Druckpaste DP2.2

Man vermischte miteinander 581 g entmineralisiertes Wasser,
2 g einer 70 Gew.-% Lösung von Stearinsäure-isodecylester in C₁₂H₂₈ (Isomerengemisch), 12 g wässrige Ammoniaklösung (25 Gew.-%),
5 g eines der Verbindung der zweiten Formel aus US 4,218,218 mit y = 18 und x = 0, 150 g einer Polyacrylatdispersion, Feststoffgehalt 40%, (Copolymerisat: 64 mol-% n-Butylacrylat und 36 mol-% Styrol, dynamische Viskosität: 50 mPa·s bei 23°C),
7 g 80 Gew.-% wässrige Lösung eines Hexamethoxymethylmelamin-Harzes,
3 g Polydimethylsiloxan mit Mₙ 3000 g/mol,
60 g D-I.3,
150 g einer 35%-iger Lösung von Nitrilomethansulfinsäure, Na-Salz,
30 g blaue Pigmentzubereitung P1

Man verrührte 30 Sekunden mit einem Schnellrührer bei 2000 U/min und erhielt zügige, agglomeratfreie erfindungsgemäße Druckpaste DP2.2. Die Dynamische Viskosität betrug 35 dPa·s, gemessen mit einem Viscotester VT02 der Fa. Haake.

### II.2.3 Herstellung von erfindungsgemäßer Druckpaste DP2.3 für den Dispersionsdruck

Man vermischte miteinander 913 g entmineralisiertes Wasser
12 g wässrige Ammoniaklösung (25 Gew.-%),
5 g eines der Verbindung der zweiten Formel aus US 4,218,218 mit y = 18 und x = 0, 60 g D-I.3,
10 g C.I. Disperse Violet 35

Man verrührte 30 Sekunden mit einem Schnellrührer bei 2000 U/min und erhielt zügige, agglomeratfreie erfindungsgemäße Druckpaste DP2.3. Die Dynamische Viskosität betrug 30 dPa·s, gemessen mit einem Viscotester VT02 der Fa. Haake.

### II.2.4 Herstellung von erfindungsgemäßer Druckpaste DP2.4 für den Dispersionsdruck

Man vermischte miteinander 913 g entmineralisiertes Wasser,
12 g wässrige Ammoniaklösung (25 Gew.-%),
5 g der Verbindung der zweiten Formel aus US 4,218,218 mit y = 18 und x = 0,
60 g D-I.3,
10 g optischen Aufheller der Formel

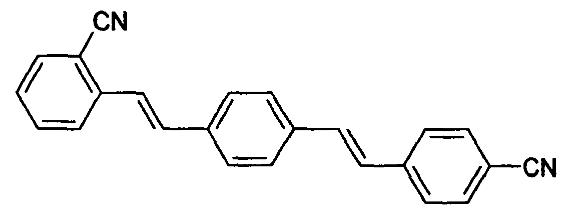

Man verrührte 30 Sekunden mit einem Schnellrührer bei 2000 U/min und erhielt zügige, agglomeratfreie erfindungsgemäße Druckpaste DP2.4. Die Dynamische Viskosität betrug 30 dPa·s, gemessen mit einem Viscotester VT02 der Fa. Haake.

### II.2.5 Herstellung von erfindungsgemäßer Druckpaste DP2.5

Man vermischte miteinander 758 g entmineralisiertes heißes Wasser (80°C),
50 g Thiodiglykol, 50 g Harnstoff, 60 g wässrige Ammoniumsulfatlösung (33 Gew.-%),
12 g wässrige Ammoniaklösung (25% Gew.-%),
10 g Säurefarbstoff C.I. Acid Blue 72,
60 g D-I.3.

Man verrührte 60 Sekunden mit einem Schnellrührer bei 2000 U/min und erhielt zügige, agglomeratfreie erfindungsgemäße Druckpaste DP2.5. Die Dynamische Viskosität betrug 30 dPa·s, gemessen mit einem Viscotester VT02 der Fa. Haake.

### II.2.6 Herstellung von erfindungsgemäßer Druckpaste DP2.6

Man vermischte miteinander 758 g entmineralisiertes heißes Wasser (80°C),
50 g Thiodiglykol, 50 g Harnstoff, 60 g wässrige Ammoniumsulfatlösung (33 Gew.-%),
12 g wässrige Ammoniaklösung (25% Gew.-%),
10 g Metallkomplexfarbstoff C.I. Acid Blue 193,
60 g D-I.3.

Man verrührte 60 Sekunden mit einem Schnellrührer bei 2000 U/min und erhielt zügige, agglomeratfreie erfindungsgemäße Druckpaste DP2.6. Die Dynamische Viskosität betrug 30 dPa·s, gemessen mit einem Viscotester VT02 der Fa. Haake.

### II.2.7 Herstellung von erfindungsgemäßer Druckpaste DP2.7

Man vermischte miteinander 726 g entmineralisiertes Wasser,
4 g einer 70 Gew.-% Lösung von Stearinsäure-isodecylester in C₁₂H₂₆ (Isomerengemisch), 10 g Nitrobenzolsulfonsaures Natrium, 5 g Tetranatriumsalz der Ethylendiamintetraessigsäure, 100 g Harnstoff, 25 g Natriumbicarbonat,
100 g D-I.1,
30 g Reaktivfarbstoff auf Monochlortriazinbasis, C.I. Reactive Orange 13.

Man verrührte 60 Sekunden mit einem Schnellrührer bei 2000 U/min und erhielt zügige, agglomeratfreie erfindungsgemäße Druckpaste DP2.7. Die Dynamische Viskosität betrug 30 dPa·s, gemessen mit einem Viscotester VT02 der Fa. Haake.

### II.2.8 Herstellung von erfindungsgemäßer Druckpaste DP2.8

Man vermischte miteinander 736 g entmineralisiertes Wasser,
4 g einer 70 Gew.-% Lösung von Stearinsäure-isodecylester in C₁₂H₂₆ (Isomerengemisch),
10 g Nitrobenzolsulfonsaures Natrium,
5 g Tetranatriumsalz der Ethylendiamintetraessigsäure,
100 g Harnstoff,
25 g Natriumbicarbonat,
100 g D-I.1,
20 g Fluorescent Brightener C.I. 230.

Man verrührte 60 Sekunden mit einem Schnellrührer bei 2000 U/min und erhielt zügige, agglomeratfreie erfindungsgemäße Druckpaste DP2.8. Die Dynamische Viskosität betrug 30 dPa·s, gemessen mit einem Viscotester VT02 der Fa. Haake.

### II.2.9 Herstellung von erfindungsgemäßer Druckpaste DP2.9

Man vermischte miteinander 898 g entmineralisiertes Wasser,
12 g wässrige Ammoniaklösung (25 Gew.-%),
60 g D-I.1,
30 g C.I. Vat Blue 4.

Man verrührte 60 Sekunden mit einem Schnellrührer bei 2000 U/min und erhielt zügige, agglomeratfreie erfindungsgemäße Druckpaste DP2.9. Die Dynamische Viskosität betrug 30 dPa·s, gemessen mit einem Viscotester VT02 der Fa. Haake.

### II.2.10 Herstellung von erfindungsgemäßer Druckpaste DP2.10

Man vermischte miteinander 898 g entmineralisiertes Wasser,
12 g wässrige Ammoniaklösung (25 Gew.-%),
60 g D-I .1,
30 g Fluorescent Brightener C.I. 230.

Man verrührte 60 Sekunden mit einem Schnellrührer bei 2000 U/min und erhielt zügige, agglomeratfreie erfindungsgemäße Druckpaste DP2.10. Die Dynamische Viskosität betrug 30 dPa·s, gemessen mit einem Viscotester VT02 der Fa. Haake.

### II.2.11 Herstellung von erfindungsgemäßer Druckpaste DP2.11

Man vermischte miteinander 908 g entmineralisiertes Wasser,
12 g wässrige Ammoniaklösung (25 Gew.%),
60 g D-I.3,
20 g C.I. Disperse Blue 72.

Man verrührte 60 Sekunden mit einem Schnellrührer bei 2000 U/min und erhielt zügige, agglomeratfreie erfindungsgemäße Druckpaste DP2.11. Die Dynamische Viskosität betrug 30 dPa·s, gemessen mit einem Viscotester VT02 der Fa. Haake.

### II.2.12 Herstellung von erfindungsgemäßer Druckpaste DP2.12

Man vermischte miteinander 908 g entmineralisiertes Wasser,
12 g wässrige Ammoniaklösung (25 Gew.-%),
60 g D-1.3,
20 g C.I. optischen Aufheller der Formel

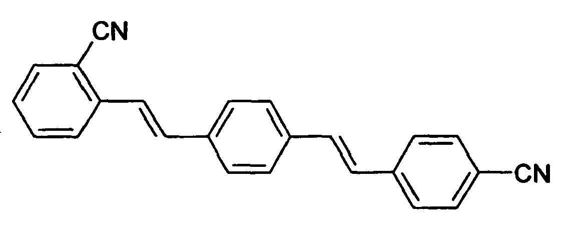

Man verrührte 60 Sekunden mit einem Schnellrührer bei 2000 U/min und erhielt zügige, agglomeratfreie erfindungsgemäße Druckpaste DP2.12. Die Dynamische Viskosität betrug 30 dPa·s, gemessen mit einem Viscotester VT02 der Fa. Haake.

### III. Druckversuche mit erfindungsgemäßen Druckpasten

Mit den erfindungsgemäßen Druckpasten wurden Druckversuche durchgeführt.

| | |
|---|---|
| Drucksubstrat: | Gewebeproben, druckfertig vorbehandelt, mit Ausnahme von Druck mit DP2.2 ungefärbt, s. Tabelle 1 |
| Gerät | Labor-Flachdrucktisch der Fa. NBK |
| Drucken: | Rakel 8 mm, Magnetzugstufe 6, Schablonengaze E 55 |
| Trocknen: | bei 80° C im Trockenschrank |

Die anschließende thermische Behandlung (Fixierung) erfolgte jeweils auf einem Spannrahmen mit Heißluft durch fünfminütiges Erhitzen auf 150 °C. Weitere Verfahrensschritte gehen aus Tabelle 1 mit Anmerkungen hervor.

**Tabelle 1: Druckversuche mit erfindungsgemäßen Druckpasten**

| Druckpaste | Substrat | Weitere Verfahrensschritte nach dem Fixieren | Druckqualität | Reibechtheit |
|---|---|---|---|---|
| DP2.1 | Baumwolle | - | vorzüglich | Trocken: 3-4 Nass: 3 |
| DP2.2 | Baumwolle schwarz, gefärbt mit VS-Reaktivfarbstoff | Vor dem Fixieren gedämpft, (Anmerkung 1) | vorzüglich | Trocken: 3-4 Nass: 3 |
| DP2.3 | Polyester | gedämpft, reduktiv gereinigt, getrocknet (Anmerkung 2) | vorzüglich | Trocken: 4 Nass: 3-4 |
| DP2.4 | Polyester | gedämpft, reduktiv gereinigt, getrocknet (Anmerkung 2) | vorzüglich | Trocken: 4 Nass: 3-4 |
| DP2.5 | Wolle | Gedämpft, getrocknet (Anmerkung 3) | vorzüglich | Trocken: 4 Nass: 3-4 |
| DP2.6 | Polyamid | Gedämpft, getrocknet (Anmerkung 3) | vorzüglich | Trocken: 4 Nass: 3-4 |
| DP2.7 | Baumwolle | gedämpft, gewaschen, getrocknet (Anmerkung 4) | vorzüglich | Trocken: 4 Nass: 3-4 |
| DP2.8 | Baumwolle | gedämpft, gewaschen, getrocknet (Anmerkung 4) | vorzüglich | Trocken: 4 Nass: 3-4 |
| DP2.9 | Baumwolle | Anmerkung 5 | vorzüglich | Trocken: 4 Nass: 3-4 |
| DP2.10 | Baumwolle | Anmerkung 5 | vorzüglich | Trocken: 4 Nass: 3-4 |
| DP2.11 | 1. Papier 2. Polyester | Anmerkung 6 | vorzüglich | Trocken: 4 Nass: 3-4 |
| DP2.12 | 1. Papier 2. Polyester | Anmerkung 6 | vorzüglich | Trocken: 4 Nass: 3-4 |

| | | | | |
|---|---|---|---|---|
| Anmerkung 1: 12 min bei 102°C mit Sattdampf gedämpft, nach dem Fixieren gewaschen und bei 80°C im Trockenschrank getrocknet. Anmerkung 2: gedämpft 7 min bei 170°C mit Heißdampf, danach reduktiv gereinigt: In einem Eimer wurde das betreffende frisch bedruckte Substrat 10 min bei 70°C mit einer wässrigen Lösung von 6 g/kg Na₂S₂O₄ und 4 g/kg NaOH behandelt. Anschließend wurde mit Wasser gespült (zuerst bei 15°C, dann bei 60°C und zum Schluss wieder bei 15°C) und getrocknet im Trockenschrank (80°C). Anmerkung 3: gedämpft 45 min bei 102 °C mit Sattdampf. Anschließend wurde mit Wasser gewaschen (zuerst bei 15°C, dann bei 40°C und zum Schluss wieder bei 15°C), getrocknet im Trockenschrank (80°C). Anmerkung 4: gedämpft 12 min bei 102 °C mit Sattdampf. Anschließend wurde mit Wasser gewaschen (zuerst bei 15°C, dann bei 60°C und zum Schluss wieder bei 15°C), getrocknet im Trockenschrank (80°C). Anmerkung 5: geklotzt mit Flotte F9, gedämpft 30 Sekunden bei 102 °C mit Sattdampf. Anschließend wurde mit Wasser gewaschen (zuerst bei 15°C, dann bei 60°C und zum Schluss wieder bei 15°C), getrocknet im Trockenschrank (80°C). Flotte F9 war wie folgt zusammengesetzt: 1 l demineralisiertes Wasser, 6 g Borax (kristallin), 4 g Isotridekanolethoxylat, 20 g/l calcinierte Soda (Na₂CO₃), 45 g NaOH (fest) und 110 g Na₂S₂O₄ wurden miteinander vermischt. Das Aufklotzen erfolgte mit einem Foulard, Hersteller Fa. Mathis, Typ Nr. HVF12085, Anpressdruck der Walzen: 2 bar; Flottenaufnahme: 75%. Anmerkung 6: beschichtetes Papier für den Transferdruck, 70 g/m² (Hersteller: Coldenhove Papier, NL-6960 AA Eerbeek - Niederlande); Transferbedingungen: 30 s bei 210 °C, Anpressdruck 6 bar. | | | | |

### IV. Herstellung von erfindungsgemäßen Färbeflotten, Ausrüstungsflotten und Beschichtungsmitteln

### IV.1. Herstellung von erfindungsgemäßer Färbeflotte F4.1

### Man vermischte miteinander

100 g einer Polyacrylatdispersion, (48,5 mol-% Ethylacrylat + 40 mol-% n-Butylacrylat + 10 mol-% Styrol + 1,5 mol-% Acrylsäure (Feststoffgehalt 40%, dynamische Viskosität: 40 mPa·s bei 23°C), bestimmt nach DIN EN ISO 3219
2 g Isotridekanolethoxylat
15 g D-I.3,
4 g einer Mischung von 60 Gew.% Polyethylenoxid mit im Mittel 45 Ethylenoxideinheiten/Molekül (Zahlenmittel) und 40 Gew.-% Rizinusöl,
5 g Diammoniumhydrogenphosphat,
10 g violette Pigmentzubereitung P3 und füllte mit entmineralisiertem Wasser auf einen Liter auf.

Man erhielt erfindungsgemäße Färbeflotte F4.1.

### IV.2 Herstellung von erfindungsgemäßer Beschichtungsflotte F4.2

### Man vermischte miteinander

122 g Wasser,
800 g einer Polyacrylatdispersion (70 mol-% n-Butylacrylat + 30 mol-% Styrol) (Feststoffgehalt 55%, dynamische Viskosität: 155 mPa·s bei 23°C),
5 g einer 80 Gew.-% wässrigen Lösung eines Hexamethoxymethylmelamin-Harzes, 1 g wässrige Ammoniaklösung (25 Gew.-%),
20 g einer 30 Gew.-% wässrigen Emulsion von Polydimethylsiloxan mit zwei (CH₂)₃-NH₂-Gruppen pro Molekül, jeweils am endständigen Si-Atom,
40 g D-I.2,
1 g einer 70 Gew.-% Lösung von Stearinsäure-isodecylester in C₁₂H₂₆ (Isomerengemisch)

Man erhielt erfindungsgemäße Beschichtungsflotte F4.2.

### IV.3 Herstellung von erfindungsgemäßer Beschichtungsflotte F4.3 für die Schaumbeschichtung

### Man vermischte miteinander

320 g Wasser,
420 g eines anionischen Polyurethans in wässriger Dispersion aus IV.8 (bezogen auf Dispersion)
8 g einer 80 Gew.-% wässrigen Lösung eines Hexamethoxymethylmelamin-Harzes, 12 g wässrige Ammoniaklösung (25 Gew.-%),
40 g einer 30 Gew.-% wässrigen Emulsion von Polydimethylsiloxan mit zwei (CH₂)₃-NH₂-Gruppen pro Molekül, jeweils am endständigen Si-Atom,
80 g Magnesiumsilikat,
80 g einer Mischung von Ammoniumstearat + 1,3-Bis(2,6-Dimethylphenoxy)-2-propanol x 18 Ethylenoxid (1:1),
40 g D-1.3,

Man erhielt erfindungsgemäße Beschichtungsflotte F4.3.

### IV.4 Herstellung von erfindungsgemäßer Beschichtungsflotte F4.4

Man verwendete D-I.3 als Beschichtungsflotte F4.4 ohne weitere Verdünnung und ohne weitere Reagenzien.

### IV.5 Herstellung von erfindungsgemäßer Ausrüstungsflotte F4.5

### Man vermischte miteinander

80 g 1,3-Dimethyl-4,5-dihydroxyethylenharnstoff (DMeDHEU),
30 g MgCl₂·6 H₂O,
0,5 g 60 Gew.-% wässrige Essigsäure,
15 g D-I.1,
und füllte mit Wasser auf einen Liter auf. Man erhielt erfindungsgemäße Ausrüstungsflotte F4.5.

### IV.6 Herstellung von erfindungsgemäßer Ausrüstungsflotte F4.6

### Man vermischte miteinander

40 g einer 70 Gew.-% wässrigen Lösung eines Umsetzungsproduktes von DMDHEU mit Methanol,
11 g MgCl₂·6 H₂O,
30 g einer 30 Gew.-% wässrigen Emulsion von Polydimethylsiloxan mit zwei (CH₂)₃-NH₂-Gruppen pro Molekül, jeweils am endständigen Si-Atom,
5 g optischer Aufheller der Formel 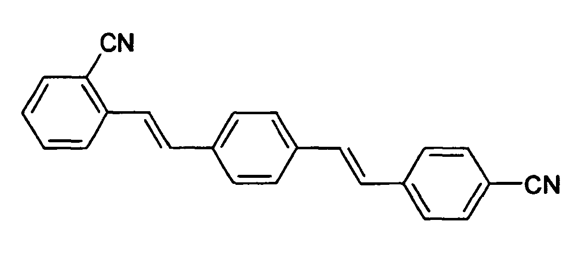 0,5 g einer 90 Gew.-% wässrigen Lösung von Isotridekanolethoxylat,
15 g D-I.2,
und füllte mit Wasser auf einen Liter auf. Man erhielt erfindungsgemäße Ausrüstungsflotte F4.6.

### IV.7 Herstellung von erfindungsgemäßer Ausrüstflotte F4.7

### Man vermischte miteinander

30 g einer 30 Gew.-% wässrigen Emulsion von Polydimethylsiloxan mit zwei (CH₂)₃-NH₂-Gruppen pro Molekül, jeweils am endständigen Si-Atom,
5 g optischer Aufheller der Formel 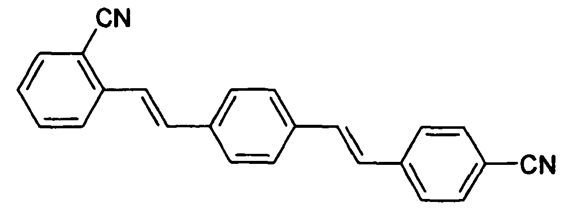 0,5 g einer 90 Gew.-% wässrigen Lösung von Isotridekanolethoxylat,
15g D-I.3
und füllte mit Wasser auf einen Liter auf. Man erhielt erfindungsgemäße Ausrüstungsflotte F4.7.

### IV.8 Herstellung eines anionischen Polyurethan in wässriger Dispersion

6,85 g Neopentylglykol, 7,03 g Dimethylolpropionsäure, 51,95 g Polyesterdiol (Polyesterdiol mit einer Hydroxylzahl von 140 mg KOH/g Polyesterdiol, bestimmt nach DIN 53240, erhältlich aus Isophthalsäure, Adipinsäure und 1,4-Cyclohexandimethanol in Molverhältnis 1 : 1 : 2,2) und 53,01 g 4,4'-Diphenyldiisocyanat wurden in 118,74 g Tetrahydrofuran, das zuvor über Na/Benzophenon nach einer Labor-StandardMethode destilliert worden war, gelöst. Man gab einen Tropfen Di-n-butylzinndilaurat zu und brachte die Reaktionslösung zum Kochen. Man erhitzte unter Rückfluss, bis sich kein freies Isocyanat mehr nachweisen ließ (titrimetrisch gemäß DIN 53 185). Danach kühlte man die Reaktionslösung mit Hilfe eines Eisbads ab, versetzte mit einer Lösung von 6,25 g Diethanolamin in 6,25 g destilliertem Tetrahydrofuran und danach mit 5,4 g Triethylamin. Man gab 110 g Wasser zu und destillierte das Tetrahydrofuran ab. Man erhielt ein anionisches Polyurethan in wässriger Dispersion, Feststoffgehalt 50 Gew.-%.

### V. Färbe-, Beschichtungs- und Ausrüstversuche mit erfindungsgemäßen Färbe-, Beschichtungs- und Ausrüstflotten

### Allgemeine Vorschrift:

Erfindungsgemäße Färbe-, Beschichtungs- und Ausrüstflotte wurde jeweils mit Hilfe eines Foulards, Hersteller Fa. Mathis, Typ Nr. HVF12085, auf eine 100%iges Baumwollgewebe aufgeklotzt (ungefärbt, ungebleicht, Flächengewicht 110g/m²). Anpressdruck der Walzen: 2,5 bar, Geschwindigkeit 1,25 m/min. Die Flottenaufnahme betrug 70 %. Anschließend wurde das Baumwollgewebe 3 min bei 110°C getrocknet. Daran anschließend wurde das Baumwollgewebe 30 Sekunden bei 180°C thermisch fixiert.

Man erhielt erfindungsgemäß gefärbtes, beschichtetes bzw. ausgerüstetes Baumwollgewebe. Die Färbung, Beschichtung bzw. Ausrüstung zeichnete sich jeweils durch besondere Egalität aus. Erfindungsgemäß gefärbtes, beschichtetes bzw. ausgerüstetes Baumwollgewebe wies jeweils gute Pflegeleichteffekte, permanente Bügelfalten, gute Reiß- und Scheuerfestigkeit, sehr niedrige Formaldehydwerte auf.

## Patentansprüche

1. Verwendung von wässrigen Dispersionen von (Co)polymerisaten von mindestens einem ethylenisch ungesättigten Monomer MON zur Herstellung von Textilhilfsmitteln, ausgewählt aus
(A) Druckpasten für den Pigmentdruck mit einer dynamischen Viskosität im Bereich von 0,1 bis 59 dPa·s, gemessen bei 20 °C,
(B) Druckpasten für den Transferdruck, den Dispersionsdruck, den Druck mit Säure- und Metallkomplexfarbstoffen, den Reaktivdruck oder den Küpendruck,
(C) Färbeflotten für die Textilfärbung,
(D) Beschichtungsmitteln,
(E) Ausrüstungsflotten,
**dadurch gekennzeichnet, dass** mindestens eine wässrige Dispersion in Gegenwart mindestens eines wasserlöslichen Polymeren hergestellt ist, wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
(β1) einem oder mehreren nichtionischen monoethylenisch ungesättigten Monomeren,
(β2) einem oder mehreren kationischen monoethylenisch ungesättigten Monomeren,
(β3) optional einem oder mehreren anionischen monoethylenisch ungesättigten Monomeren, wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

2. Verfahren zur Herstellung von Textilhilfsmitteln, ausgewählt aus
(A) Druckpasten für den Pigmentdruck mit einer dynamischen Viskosität im Bereich von 0,1 bis 59 dPa·s, gemessen bei 20 °C,
(B) Druckpasten für den Transferdruck, den Dispersionsdruck, den Druck mit Säure- und Metallkomplexfarbstoffen, den Reaktivdruck oder den Küpendruck
(C) Färbeflotten für die Textilfärbung,
(D) Beschichtungsmitteln,
(E) Ausrüstungsflotten,
**dadurch gekennzeichnet, dass** zur Herstellung der Textilhilfsmittel mindestens eine wässrige Dispersion von mindestens einem (Co)polymerisat von mindestens einem ethylenisch ungesättigten Monomer MON verwendet wird, wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
(β1) einem oder mehreren nichtionischen monoethylenisch ungesättigten Monomer,
(β2) einem oder mehreren kationischen monoethylenisch ungesättigten Monomeren,
(β3) optional einem oder mehreren anionischen monoethylenisch ungesättigten Monomeren, wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

3. Verfahren nach Anspruch 2, **dadurch gekennzeichnet, dass** mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykoacrylaten oder Alkylpolyalkylenglykolmethacrylaten und Methacrylsäure.

4. Verfahren nach einem der Ansprüche 2 bis 3, **dadurch gekennzeichnet, dass** es sich bei Polyethylenglykolen und ein- oder beidseitig mit Alkyl-, Carboxyl- oder Aminogruppen substituierten Polyalkylenglykolen in (a1) um Polyethylenglykol mit einem mittleren Molekulargewicht Mₙ im Bereich von 100 bis 100.000 g/mol handelt.

5. Verfahren nach einem der Ansprüche 2 bis 4, **dadurch gekennzeichnet, dass** es sich bei ethylenisch ungesättigten anionischen Monomeren um monoethylenisch ungesättigte C₃-C₅-Carbonsäuren, Vinylsulfonsäure, Styrolsulfonsäure, Acrylamidomethylpropansulfonsäure, Vinylphosphonsäure jeweils als freie Säure oder als Alkalimetall- oder Ammoniumsalz handelt.

6. Verfahren nach einem der Ansprüche 2 bis 5, **dadurch gekennzeichnet, dass** es sich bei (Co)polymerisaten von mindestens einem ethylenisch ungesättigten Monomer MON um Copolymerisate mit mindestens einem nichtionischen oder kationischen Comonomer handelt, gewählt aus (Meth)acrylamid, Acrylsäureestern von C₁-C₄-Alkanolen, Methacrylsäureestern von C₁-C₂-Alkanolen, Vinylacetat, Vinylpropionat, Diallyldimethylammoniumchlorid, 2-[N,N-Di(C₁-C₄- alkyl)amino]ethyl(meth)acrylaten, 3-[N,N-Di(C₁-C₄-alkyl)amino]propyl(meth)acrylaten, N-Vinylimidazol, und C₁-C₄-Alkyl oder Benzyl quaterniertem N-Vinylimidazol.

7. Verfahren nach einem der Ansprüche 2 bis 6, **dadurch gekennzeichnet, dass** es sich bei (Co)polymerisaten von mindestens einem ethylenisch ungesättigten anionischen Monomer um vernetzte Copolymerisate handelt.

8. Verfahren nach einem der Ansprüche 2 bis 7, **dadurch gekennzeichnet, dass** wässrige Dispersionen von mindestens einem (Co)polymerisat von mindestens einem ethylenisch ungesättigten anionischen Monomer MON einen Gehalt an anorganischen Salzen im Bereich von 0,1 bis 15 Gew.% aufweisen, bezogen auf den Feststoffgehalt der jeweiligen wässrigen Dispersion.

9. Druckpasten für den Pigmentdruck mit einer dynamischen Viskosität im Bereich von 0,1 bis 59 dPa·s, gemessen bei 20 °C, Druckpasten für den Transferdruck, den Dispersionsdruck, den Druck mit Säure- und Metallkomplexfarbstoffen, den Reaktivdruck oder den Küpendruck, Färbeflotten für die Textilfärbung, Beschichtungsmittel, Ausrüstungsflotten, hergestellt nach einem Verfahren nach einem der Ansprüche 2 bis 8.

10. Verfahren zum Bedrucken von Textil unter Verwendung von mindestens einer Druckpaste nach Anspruch 9.

11. Verfahren zum Färben von Textil unter Verwendung von mindestens einer Färbeflotte nach Anspruch 9.

12. Verfahren zum Beschichten von Textil unter Verwendung von mindestens einem Beschichtungsmittel nach Anspruch 9.

13. Verfahren zum Ausrüsten von Textil unter Verwendung von mindestens einer Ausrüstungsflotte nach Anspruch 9.

14. Textile Substrate, behandelt nach einem Verfahren nach einem der Ansprüche 10 bis 13.

15. Textiles Substrat nach Anspruch 14, wobei es sich bei dem textilen Substrat um ein textiles Gewebe, Garn, Filament, Gewirke, bahnförmige Web- oder Maschenware oder Vlies handelt.

16. Pigmentzubereitungen, enthaltend mindestens eine wässrige Dispersionen von (Co)polymerisaten von mindestens einem ethylenisch ungesättigten Monomer MON,
**dadurch gekennzeichnet, dass** mindestens eine wässrige Dispersion in Gegenwart mindestens eines wasserlöslichen Polymeren hergestellt ist, wobei mindestens ein wasserlösliches Polymer gewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und mindestens ein wasserlösliches Polymer gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
(β1) einem oder mehreren nichtionischen monoethylenisch ungesättigten Monomeren,
(β2) einem oder mehreren kationischen monoethylenisch ungesättigten Monomeren,
(β3) optional einem oder mehreren anionischen monoethylenisch ungesättigten Monomeren, wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

## Claims

1. Use of aqueous dispersions of (co)polymers of at least one ethylenically unsaturated monomer MON for the preparation of textile auxiliaries, selected from
(A) print pastes for pigment printing with a dynamic viscosity in the range of from 0.1 to 59 dPa·s, measured at 20°C,
(B) print pastes for transfer printing, dispersion printing, printing with acidic and metal complex dyes, reactive printing or vat printing,
(C) dye baths for textile dyeing,
(D) coating agents,
(E) finishing baths,
**characterised in that** at least one aqueous dispersion is prepared in the presence of at least one water-soluble polymer, wherein at least one water-soluble polymer is selected from
(a1) grafting polymers of vinyl acetate and/or vinyl propionate on polyalkylene glycol or polyalkylene glycol substituted on one side or both sides with alkyl, carboxyl or amino groups,
(a2) copolymers of alkyl polyalkylene glycol(meth)acrylates and (meth)acrylic acid,
(a3) polyalkylene glycols,
(a4) polyalkylene glycols substituted on one side or both sides with alkyl, carboxyl or amino groups,
and at least one water-soluble polymer is selected from
(b1) hydrolysed copolymers of vinyl alkyl ethers and maleic acid anhydride as free polyacid or at least partly neutralised with alkali metal hydroxides or ammonium bases,
(b2) modified or unmodified starch,
(b3) synthetic copolymers, obtainable by copolymerisation of
(β1) one or more non-ionic monoethylenically unsaturated monomers,
(β2) one or more cationic monoethylenically unsaturated monomers,
(β3) optionally one more anionic monoethylenically unsaturated monomers, wherein the molar proportion of cationic monoethylenically unsaturated monomers (β2) polymerised in (b3) is higher than the proportion of polymerised anionic monoethylenically unsaturated monomers (β3).

2. A method of preparing textile auxiliaries, selected from
(A) print pastes for pigment printing with a dynamic viscosity in the range of from 0.1 to 59 dPa.s, measured at 20°C,
(B) print pastes for transfer printing, dispersion printing, printing with acidic and metal complex dyes, reactive printing or vat printing,
(C) dye baths for textile dyeing,
(D) coating agents,
(E) finishing baths,
**characterised in that** to prepare the textile auxiliaries at least one aqueous dispersion of at least one (co)polymer of at least one ethylenically unsaturated monomer MON is used, wherein at least one water-soluble polymer is selected from
(a1) grafting polymers of vinyl acetate and/or vinyl propionate on polyalkylene glycol or polyalkylene glycol substituted on one side or both sides with alkyl, carboxyl or amino groups,
(a2) copolymers of alkyl polyalkyl glycol(meth)acrylates and (meth)acrylic acid,
(a3) polyalkylene glycols,
(a4) polyalkylene glycols substituted on one side or both sides with alkyl, carboxyl or amino groups,
and at least one water-soluble polymer is selected from
(b1) hydrolysed copolymers from vinyl alkyl ethers and maleic acid anhydride as free polyacid or at least partly neutralised with alkali metal hydroxides or ammonium bases,
(b2) modified or unmodified starch,
(b3) synthetic copolymers, obtainable by copolymerisation of
(β1) one or more non-ionic monoethylenically unsaturated monomers,
(β2) one or more cationic monoethylenically unsaturated monomers,
(β3) optionally one more anionic monoethylenically unsaturated monomers, wherein the molar proportion of cationic monoethylenically unsaturated monomers (β2) polymerised in (b3) is higher than the proportion of polymerised anionic monoethylenically unsaturated monomers (β3).

3. A method according to Claim 2, **characterised in that** at least one water-soluble polymer is chosen from
(a1) grafting polymers of vinyl acetate and/or vinyl propionate on polyalkylene glycol or polyalkylene glycol substituted on one side or both sides with alkyl, carboxyl or amino groups,
(a2) copolymers of alkyl polyalkylene glycol acrylates or alkylpolyalkylene glycol methacrylates and methacrylic acid.

4. A method according to any one of Claims 2 to 3,
**characterised in that** in the case of polyethylene glycols and polyalkylene glycols in (a1) substituted on one side or both sides with alkyl, carboxyl or amino groups, polyethylene glycol is involved having an average molecular weight Mₙ in the range of from 100 to 100,000 g/mol.

5. A method according to any one of Claims 2 to 4,
**characterised in that** in the case of ethylenically unsaturated anionic monomers, monoethylenically unsaturated C₃-C₅ carboxylic acids, vinyl sulphonic acid, styrene sulphonic acid, acrylic amidomethyl propane sulphonic acid, vinyl phosphonic acid are involved respectively as free acid or as alkali metal or ammonium salt.

6. A method according to any one of Claims 2 to 5,
**characterised in that** in the case of (co)polymers of at least one ethylenically unsaturated monomer MON, copolymers with at least one non-ionic or cationic comonomer are involved, selected from (meth)acrylamide, acrylic acid esters of C₁-C₄ alkanols, methacrylic acid esters of C₁-C₂ alkanols, vinyl acetate, vinyl propionate, diallyl dimethyl ammonium chloride, 2-[N,N-Di(C₁-C₄ alkyl) amino] ethyl (meth) acrylates, 3-[N,N-Di(C₁-C₄ alkyl)amino]propyl(meth)acrylates, N-vinyl imidazole, and C₁-C₄ alkyl or benzyl quaternised N-vinyl imidazole.

7. A method according to any one of Claims 2 to 6,
**characterised in that** in the case of (co)polymers of at least one ethylenically unsaturated anionic monomer, cross-linked copolymers are involved.

8. A method according to any one of Claims 2 to 7,
**characterised in that** aqueous dispersions of at least one (co)polymer of at least one ethylenically unsaturated anionic monomer MON have a content of inorganic salts in the range of from 0.1 to 15 % by weight, in relation to the solids content of the respective aqueous dispersion.

9. Print pastes for the pigment printing with a dynamic viscosity in the range of from 0.1 to 59 dPa.s, measured at 20°C, print pastes for transfer printing, dispersion printing, printing with acidic and metal complex dyes, reactive printing or vat printing, dye baths for textile dyeing, coating agents, finishing baths, prepared in accordance with a method according to any one of Claims 2 to 8.

10. A method of printing textiles using at least one print paste according to Claim 9.

11. A method of dyeing textiles using at least one dye bath according to Claim 9.

12. A method of coating textiles using at least coating agent according to Claim 9.

13. A method of finishing textiles using at least one finishing bath according to Claim 9.

14. Textile substrates, treated in accordance with a method according to any one of Claims 10 to 13.

15. A textile substrate according to Claim 14, wherein the textile substrate is a textile fabric, thread, filament, knitted fabric, web-like woven or knitware or non-woven fabric.

16. Pigment preparations, containing at least one aqueous dispersion of (co)polymers of at least one ethylenically unsaturated monomer MON,
**characterised in that** at least one aqueous dispersion is prepared in the presence of at least one water-soluble polymer, wherein at least one water-soluble polymer is selected from
(a1) grafting polymers of vinyl acetate and/or vinyl propionate on polyalkylene glycol or polyalkylene glycol substituted on one side or both sides with alkyl, carboxyl or amino groups,
(a2) copolymers of alkyl polyalkylene glycol(meth)acrylates and (meth)acrylic acid,
(a3) polyalkylene glycols,
(a4) polyalkylene glycols substituted on one side or both sides with alkyl, carboxyl or amino groups,
and at least one water-soluble polymer is selected from
(b1) hydrolysed copolymers from vinyl alkyl ethers and maleic acid anhydride as free polyacid or at least partly neutralised with alkali metal hydroxides or ammonium bases,
(b2) modified or unmodified starch,
(b3) synthetic copolymers, which can be obtained by copolymerisation of
(β1) one or more non-ionic monoethylenically unsaturated monomers,
(β2) one or more cationic monoethylenically unsaturated monomers,
(β3) optionally one more anionic monoethylenically unsaturated monomers, wherein the molar proportion of cationic monoethylenically unsaturated monomers (β2) polymerised in (b3) is higher than the proportion of polymerised anionic monoethylenically unsaturated monomers (β3).

## Revendications

1. Utilisation de dispersions aqueuses de (co)polymères d'au moins un monomère insaturé éthylénique MON pour la préparation d'agents auxiliaires pour textiles, choisies parmi
(A) des pâtes pour impression pour l'impression au charbon avec une viscosité dynamique dans l'intervalle de 0,1 à 59 dPa.s, mesurée à 20 °C,
(B) des pâtes pour impression pour l'impression par transfert, l'impression à dispersion, l'impression avec des colorants acides et à complexes métalliques, l'impression réactive et l'impression en cuve,
(C) des bains de teinture pour la teinture des textiles,
(D) des produits de revêtement,
(E) des bains d'apprêt,
**caractérisée en ce qu'**au moins une dispersion aqueuse est préparée en présence d'au moins deux polymères solubles dans l'eau, sachant qu'au moins un polymère soluble dans l'eau est choisi parmi
(a1) des polymères greffés d'acétate de vinyle et/ou de propionate de vinyle sur un polyalkylèneglycol ou un polyalkylèneglycol substitué d'un ou des deux côtés par des groupes alkyles, carboxyles ou amines,
(a2) des copolymères de (méth)acrylates d'alkylpolyalkylèneglycol et d'acide (méth)acrylique,
(a3) des polyalkylèneglycols,
(a4) des polyalkylèneglycols substitués d'un ou des deux côtés par des groupes alkyles, carboxyles ou amines,
et au moins un polymère soluble dans l'eau est choisi parmi
(b1) des copolymères hydrolysés d'éthers alkylvinyliques et d'anhydride maléique comme polyacides libres ou au moins partiellement neutralisés par des hydroxydes de métaux alcalins ou des bases d'ammonium,
(b2) de l'amidon, modifié ou non modifié,
(b3) des copolymères synthétiques, accessibles par copolymérisation de
(β1) un ou plusieurs monomères non ioniques insaturés monoéthyléniques,
(β2) un ou plusieurs monomères cationiques insaturés monoéthyléniques,
(β3) en option, un ou plusieurs monomères anioniques insaturés monoéthyléniques, sachant que la proportion molaire de monomères cationiques insaturés monoéthyléniques (β2) incorporés par polymérisation dans (b3) est plus grande que la proportion de monomères (β3) anioniques insaturés monoéthyléniques incorporés par polymérisation.

2. Procédé pour la préparation d'agents auxiliaires pour textiles, choisis parmi,
(A) des pâtes pour impression pour l'impression au charbon avec une viscosité dynamique dans l'intervalle de 0,1 à 59 dPa.s, mesurée à 20°C,
(B) des pâtes pour impression pour l'impression par transfert, l'impression à dispersion, l'impression avec des colorants acides et à complexes métalliques, l'impression réactive et l'impression en cuve,
(C) des bains de teinture pour la teinture des textiles,
(D) des produits de revêtement,
(E) des bains d'apprêt,
**caractérisé en ce que**, pour la préparation d'agents auxiliaires pour textiles, au moins une dispersion aqueuse d'au moins un (co)polymère d'au moins un monomère insaturé éthylénique MON est utilisée, sachant qu'au moins un polymère soluble dans l'eau est choisi parmi
(a1) des polymères greffés d'acétate dé vinyle et/ou de propionate de vinyle sur un polyalkylène glycol ou un polyalkylène glycol substitué d'un ou des deux côtés par des groupes alkyles, carboxyles ou amines,
(a2) des copolymères de (méth)acrylates d'alkylpolyalkylèneglycol et d'acide (méth)acrylique,
(a3) des polyalkylèneglycols,
(a4) des polyalkylèneglycols substitués d'un ou des deux côtés par des groupes alkyles, carboxyles ou amines,
et qu'au moins un polymère soluble dans l'eau est choisi parmi
(b1) des copolymères hydrolysés d'éthers alkylvinyliques et d'anhydride maléique comme polyacides libres ou au moins partiellement neutralisés par des hydroxydes de métaux alcalins ou des bases d'ammonium,
(b2) de l'amidon, modifié ou non modifié,
(b3) des copolymères synthétiques, accessibles par copolymérisation de
(β1) un ou plusieurs monomères non ioniques insaturés monoéthyléniques,
(β2) un ou plusieurs monomères cationiques insaturés monoéthyléniques,
(β3) en option, un ou plusieurs monomères anioniques insaturés monoéthyléniques, sachant que la proportion molaire de monomères cationiques insaturés monoéthyléniques (β2) incorporés par polymérisation dans (b3) est plus grande que la proportion de monomères (β3) anioniques insaturés monoéthyléniques incorporés par polymérisation.

3. Procédé selon la revendication 2, **caractérisé en ce qu'**au moins un polymère soluble dans l'eau est choisi parmi
(a1) des polymères greffés d'acétate de vinyle et/ou de propionate de vinyle sur un polyalkylèneglycol ou un polyalkylèneglycol substitué d'un ou des deux côtés par des groupes alkyles, carboxyles ou amines,
(a2) des copolymères d'acrylates d'alkylpolyalkylèneglycol ou de méthacrylates d'alkylpolyalkylèneglycol et d'acide méthacrylique.

4. Procédé selon l'une quelconque des revendications 2 à 3, **caractérisé en ce qu'**il s'agit pour les polyéthylèneglycols et pour les polyalkylèneglycols substitués d'un ou des deux côtés par des groupes alkyles, carboxyles ou amines en (a1), de polyéthylèneglycol avec un poids moléculaire moyen Mₙ dans l'intervalle de 100 à 100.000 g/mol.

5. Procédé selon l'une quelconque des revendications 2 à 4, **caractérisé en ce qu'**il s'agit pour les monomères anioniques insaturés éthyléniques d'acides carboxyliques insaturés monoéthyléniques en C₃ à C₅, d'acide vinylsulfonique, d'acide styrènesulfonique, d'acide acrylamidométhylpropanesulfonique, d'acide vinylphosphonique, respectivement comme acides libres ou comme sels de métaux alcalins ou d'ammonium.

6. Procédé selon l'une quelconque des revendications 2 à 5, **caractérisé en ce qu'**il s'agit, pour les (co)polymères d'au moins un monomère MON insaturé éthylénique, de copolymères avec au moins un comonomère non ionique ou cationique, choisi parmi le (méth)acrylamide, les esters d'alcanols en C₁ à C₄ et d'acide acrylique, les esters d'alcanols en C₁ ou C₂ et d'acide méthacrylique, l'acétate de vinyle, le propionate de vinyle, le chlorure de diallyldiméthylammonium, le (méth)acrylate de 2-[N,N-di(alkyl en C₁ à C₄)amino]éthyle, le (méth)acrylate de 3-[N,N-di(alkyl en C₁ à C₄)amino]propyle, le N-vinylimidazole, et le N-vinylimidazole quaternaire par alkyle en C₁ à C₄ ou par benzyle.

7. Procédé selon l'une quelconque des revendications 2 à 6, **caractérisé en ce qu'**il s'agit pour les (co)polymères d'au moins un monomère anionique insaturé éthylénique de copolymères réticulés.

8. Procédé selon l'une quelconque des revendications 2 à 7, **caractérisé en ce que** des dispersions aqueuses d'au moins un (co)polymère d'au moins un monomère anionique insaturé éthylénique MON présente une teneur en sels inorganiques dans l'intervalle de 0,1 à 15 % en poids, rapporté à la teneur en solide de la dispersion aqueuse respective.

9. Pâtes pour impression pour l'impression au charbon avec une viscosité dynamique dans l'intervalle de 0,1 à 59 dPa.s, mesurée à 20 °C, pâtes pour impression pour l'impression par transfert, l'impression à dispersion, l'impression avec des colorants acides et à complexes métalliques, l'impression réactive et l'impression en cuve, bains de teinture pour la teinture des textiles, produits de revêtement, bains d'apprêt, préparées par un procédé selon l'une quelconque des revendications 2 à 8.

10. Procédé d'impression de textile moyennant l'utilisation d'au moins une pâte pour impression selon la revendication 9.

11. Procédé de teinture de textile moyennant l'utilisation d'au moins un bain de teinture selon la revendication 9.

12. Procédé de revêtement de textile moyennant l'utilisation d'au moins un produit de revêtement selon la revendication 9.

13. Procédé d'apprêt de textile moyennant l'utilisation d'au moins un bain d'apprêt selon la revendication 9.

14. Substrats textiles, traités d'après un procédé selon l'une quelconque des revendications 10 à 13.

15. Substrat textile selon la revendication 14, sachant qu'il s'agit pour le substrat textile d'un textile tissé, d'un fil, d'un filament, d'un tissu à mailles, d'un tissu à mailles au mètre ou d'un non-tissé.

16. Préparation de pigments, contenant au moins une dispersion aqueuse de (co)polymères d'au moins un monomère insaturé éthylénique MON,
**caractérisée en ce qu'**au moins une dispersion aqueuse est préparée en présence d'au moins deux polymères solubles dans l'eau, sachant qu'au moins un polymère soluble dans l'eau est choisi parmi
(a1) des polymères greffés d'acétate de vinyle et/ou de propionate de vinyle sur un polyalkylène glycol ou un polyalkylène glycol substitué d'un ou des deux côtés par des groupes alkyles, carboxyles ou amines,
(a2) des copolymères de (méth)acrylates d'alkylpolyalkylèneglycol et d'acide (méth)acrylique,
(a3) des polyalkylèneglycols,
(a4) des polyalkylèneglycols substitués d'un ou des deux côtés par des groupes alkyles, carboxyles ou amines,
et qu'au moins un polymère soluble dans l'eau est choisi parmi
(b1) des copolymères hydrolysés d'éthers alkylvinyliques et d'anhydride maléique comme polyacides libres ou au moins partiellement neutralisés par des hydroxydes de métaux alcalins ou des bases d'ammonium,
(b2) de l'amidon, modifié ou non modifié,
(b3) des copolymères synthétiques, accessibles par copolymérisation de
(β1) un ou plusieurs monomères non ioniques insaturés monoéthyléniques,
(β2) un ou plusieurs monomères cationiques insaturés monoéthyléniques,
(β3) en option, un ou plusieurs monomères anioniques insaturés monoéthyléniques, sachant que la proportion molaire de monomères cationiques insaturés monoéthyléniques (β2) incorporés par polymérisation dans (b3) est plus grande que la proportion de monomères (β3) anioniques insaturés monoéthyléniques incorporés par polymérisation.
